# EUROPEAN PATENT APPLICATION

(11) **EP 1 491 091 A1**
(43) Date of publication of application: **29.12.2004**
(21) Application number: 03743607.8
(22) Date of filing: 05.03.2003
(51) Int. Cl.: A01M 1/20, A01M 7/00

(54) **INSECT-PROOFING MEANS AND METHOD OF INSECT-PROOFING**

(30) Priority: 05.03.2002 JP 2002058568
(71) Applicant: SAKURA COLOR PRODUCTS CORPORATION, Osaka-shi, Osaka 540-8508 (JP); Sumitomo Chemical Company, Limited, Tokyo 104-8260 (JP)
(72) Inventor: NISHIMURA, T., c/o SAKURA COLOR PRODUCTS CORP., Osaka-shi, Osaka 540-8508 (JP); INOUE, S., c/o SAKURA COLOR PRODUCTS CORP., Osaka-shi, Osaka 540-8508 (JP); IWASAKI, Tomonori, Sanda-shi, Hyogo 669-1323 (JP)
(74) Representative: Paul, Dieter-Alfred, Dipl.-Ing.
(86) International application number: PCT/JP2003/002551
(87) International publication number: WO 2003/073846

(57) **Abstract**

The invention aims to provide a pest controller that reduces the possibility of unintentional contact with a chemical substance, that is easy to carry, that is able to maintain a sufficient pest-controlling effect in a portable size, and further that is easy to adjust a pest-controlling effect. A pest controller (1) of the present invention includes a container (8) holding a chemical substance (22) therewithin, wherein the container includes a substance exposing portion communicating with the inside of container (8), and a cover for sealing, the chemical substance containing an active ingredient with a pest-controlling effect, and the active ingredient being volatilizable at a normal temperature.

## Description

### BACKGROUND OF THE INVENTION

### FIELD OF THE INVENTION

The present invention relates to a pest controller for killing or repelling pests such as insects harmful to persons. More particularly, it relates to a pest controller available without a fire, an electricity or the like. It further relates to a method for controlling pests therewith.

### BACKGROUND ART

Pest controllers such as mosquito coils and electric mosquito mats are conventionally used for killing or repelling noxious organism such as harmful pests so as to avoid them.

A various kind of pest controllers having different structures are proposed as the controllers available without a fire, an electricity or the like.

Japanese patents Laid-Open No. Hei. 09-289855, No. Hei. 09-308421 and No. Hei. 11-255604 disclose the known art relating to the present invention.

The conventional pest controller that is disclosed in Japanese patent Laid-Open No. Hei. 09-289855 includes cylindrical paper or the like that are bundled and contain a pesticidal or pest repellent compound that is volatile at a normal temperature. The document also discloses a structure including papers rolled or bent with spaces therebetween that contains a pesticidal or pest repellent compound being volatile at a normal temperature.

The conventional pest controller that is disclosed in Japanese patent Laid-Open No. Hei. 09-308421 includes a foldable member made of paper having a number of vents that contains a pesticidal or pest repellent compound being volatile at a normal temperature.

The conventional pest controller that is disclosed in Japanese patent Laid-Open No. Hei. 11-255604 includes a balloon member made of such as rubber that carries a pesticidal or pest repellent compound being volatile at a normal temperature.

However, the conventional controllers are difficult to use and to be made.

That is, the conventional controllers have pesticidal or pest repellent compounds being volatile at a normal temperature on such as paper and rubber, which are exposed to open air so as to volatilize pesticidal or pest repellent ingredients during use. Therefore, users are often liable to unintentionally contact part of paper and rubber containing the pesticidal or pest repellent ingredients.

The controllers disclosed in Japanese patent Laid-Open No. Hei. 09-289855, which are of types such as bundling the cylindrical papers, rolling the papers with spaces, and bending the papers with spaces, are too bulky to conveniently carry.

The controller disclosed in Japanese patent Laid-Open No. Hei. 09-308421 is likewise too bulky to conveniently carry, though it is to open the folded papers in use.

Further, the conventional controllers are difficult to maintain and control pesticidal effects. That is, as for the conventional controllers, the amount of pesticidal or pest repellent ingredients contained in the papers and the rubbers is limited by their sizes. Consequently, a portable controller is difficult to maintain a pesticidal effect. It is not also easy to change a volatile area, resulting in being difficult to adjust the pesticidal effect.

It is therefore an object of the present invention made in view of the problems and drawbacks described above to provide an advanced pest controller that contains pesticidal or pest repellent ingredients, that reduces the possibility of unintentional contact with the ingredients, that is easy to carry, and that is able to maintain a sufficient pesticidal effect in a portable size.

### DISCLOSURE OF THE INVENTION

An aspect of the present invention proposed for achieving the aim described above is a pest controller including a portable container holding a chemical substance therewithin, wherein the container includes a substance exposing portion (or a substance releasing portion) for exposing the chemical substance held therein to outside, and a cover for sealing the substance exposing portion, the chemical substance containing an active ingredient with a pest-controlling effect, and the active ingredient being volatilizable at a normal temperature. Herein, the term "chemical substance" includes liquid, gel, and solid substance of an active ingredient itself, and a liquid substance wherein the active ingredient is dispersed in a solvent. The active ingredient with a pest-controlling effect denotes a chemical that has insecticidal or insect repellent effects against harmful insects by volatilization.

Since the present aspect includes a container holding a chemical substance therewithin, wherein the container includes a substance exposing portion for exposing the chemical substance held therein to outside, and a cover for sealing the substance exposing portion, the chemical substance containing an active ingredient with a pest-controlling effect, and the active ingredient being volatilizable at a normal temperature, volatilization of the active ingredient with a pest-controlling effect from the substance exposing portion makes it possible to kill and/or repel harmful insects. It is also possible to be constructed without a container.

The pest controller of the invention is carried to use, due to its portability.

By the pest controller of the invention, the chemical substance is accommodated within the container, so that the possibility of unintentional contact with the ingredients is reduced.

Further, adding structure by which a size of a substance releasing portion for adjusting a volatilization is changeable enables a pest-controlling effect to be adjusted.

It may be also constructed in such a manner that the chemical substance is contactable with an open air at the substance exposing portion so as to be released into the air therefrom when the cover is open. In such a structure, when the cover is open, the chemical substance is contactable with open air at the substance exposing portion so as to be released into air therefrom. In the present aspect, when the substance exposing portion is sealed, the active ingredient does not volatilize, so that wasteful volatilization of the active ingredient can be reduced during non-use.

It may be also constructed in such a manner that the substance exposing portion is provided with an applicator for applying the chemical substance onto a body. In such a structure, the chemical substance is applied through the substance applicator of the controller, and further, the active ingredient with a pest-controlling effect is released from an applied spot, so as to kill and/or repel harmful insects. Applying the chemical substance to a wide area volatilizes the chemical substance from the wide area and brings a high chemical substance density at a surrounding area.

It may be also constructed in such a manner that the substance exposing portion is constituted by a member selected from a group consisting of a porous body, a fibrous bundle and a member with a through-hole, so that the chemical substance is exposed on a surface thereof. In such a structure, the use of liquid active ingredient makes a volatilization of active ingredient easy without dispersion outside. Further, the present aspect may be preferably employed in a structure to apply the chemical substance, thereby readily applying the substance exposed to the substance exposing portion to a body.

The substance exposing portion may be constituted by a member selected from a group consisting of a ball and a roller both being rotatable. Such a structure achieves an easy application of the chemical substance.

The chemical substance may be directly held within the container. In such a structure, it is easy to fill the substance to the container and also fill in large quantities.

It may be constructed in such a manner that the chemical substance has a fluidity and that the container further includes a substance storage containing the substance and a substance lead-out member provided between the substance storage and the substance exposing portion so as to lead the substance out of the substance storage through the substance lead-out member to the substance exposing portion. In such structure, it is easy to lead the substance out of the substance storage to the substance exposing portion.

The container may accommodate a substance retaining member, the chemical substance being capable of flowing, and retained in the substance retaining member. In such a structure, the chemical substance does not move within the container in carrying the controller. The substance retaining member may be a member not integral with the container, thereby ensuring that the substance retaining member may be exchanged by a cartridge replacement system.

The substance retaining member may be made of fiber. Such a structure allows the substance retaining member to hold plenty of chemical substance.

The container may include a storage tank and a temporary receptacle for the chemical substance. In such a structure, dependent on a pressure change in the container, if and when the pressure rises, the substance is stored in the storage tank, so as to prevent the substance from a wasteful volatilization and a leakage.

The container may be of a cylindrical shape, and the substance exposing portion may be placed at an end of the container of cylindrical shape. In such a structure, since the container is of a cylindrical shape and the substance exposing portion is placed at an end of the cylindrical container, it is easy to make the container and easy to carry it.

It may be constructed in such a manner that the container includes a container body holding the chemical substance therewithin, that the body accommodates a substance retaining member adapted to absorbing the chemical substance, the substance retaining member soaked with the chemical substance, and that the body is provided with the substance lead-out member adapted to leading the chemical substance out of the body, a proximal part of the substance lead-out member being in contact with the substance retaining member and a distal part of that being exposed out of the body. Such a structure enables the substance to volatilize through the substance lead-out member.

The substance exposing portion may be adapted to adjusting an exposing area of the chemical substance. The substance exposing portion may have a window, an opening area of which is changeable. Such structures enable an amount of volatilization of the substance to be readily adjusted.

It may constituted in such a manner that the container includes a container body holding the chemical substance therewithin, so as to hold a liquid chemical substance with a fluidity within, and that the body is provided with a substance lead-out member adapted to lead the chemical substance out of the body and a valve system, the valve system being open by a predetermined operation, whereby the chemical substance inside creeps through the substance lead-out member so as to be exposed out of the body. Such a structure employs the valve system, thereby reducing an excess creep of chemical substance. That is, by the present aspect, appropriate amount of chemical substance can creep when needed.

The container may include a substance holder holding the chemical substance with fluidity in a sealing condition therewithin, the substance holder having a follower moving according to a consumption of the chemical substance. The follower may be gel. In such structures, the follower protects the chemical substance from easy flowout and contact with the air, achieving less deteriorates.

It may be constituted in such a manner that the container includes a container body holding the chemical substance therewithin so as to hold a liquid chemical substance with a fluidity therewithin, that the body is provided with a substance lead-out member adapted to leading the chemical substance out of the body, and that to the substance lead-out member a substance releasing member separately provided is attachable. Such a structure volatilizes the chemical substance from larger area.

It may be constituted in such a manner that the container includes a container body holding the chemical substance therewithin and an attachment detachable from the body and attachable to the body in at least two ways of attachment, so as to hold a liquid chemical substance with a fluidity therewithin, and that the body is provided with a substance lead-out member adapted to leading the chemical substance out of the body, the attachment being provided with a cover for sealing the substance lead-out member, and a substance releasing member for helping release of the chemical substance, the substance lead-out member being sealed by attaching the attachment to the body in a particular position, the chemical substance being supplied to the substance releasing member from the substance lead-out member by attaching the attachment in another particular position. Such a structure makes it possible to release and seal the chemical substance depending on a position of the attachment. Further, by the present structure, the chemical substance volatilizes from the substance releasing member, so that larger volatilizing area can be obtained.

The container may have a deformable portion so that the chemical substance inside the container will be brought out by pressing the deformable portion. Such a structure enables the liquid chemical substance to be brought out with an easy operation.

The container may have a pressurizer for increasing the inner pressure of the container so that the chemical substance is brought out. In such a structure, the pressurizer presses the inner space of container to bring out the chemical substance, thereby making sure more to bring out the substance.

Another aspect of the present invention is a pest controller including a container holding a chemical substance of columnar shape therewithin, wherein the container has an opening communicating with the inside of container, and a cover for sealing the opening from outside, the cover being adapted to opening and shutting, the chemical substance being adapted to be propelled out of the container through the opening, the chemical substance containing an active ingredient with a pest-controlling effect, the active ingredient being volatilizable at a normal temperature. In such a structure, an operation of propelling out brings out the chemical substance from the opening. It is therefore possible to apply the substance brought out from the opening to a body and to volatilize the active ingredient directly from the substance brought out for controlling pests. In case of controlling pests by volatilizing the active ingredient directly from the substance brought out, a change of length brought out of the container may adjust a pest-controlling effect.

The container may include a container body, an operating portion turnable relative to the body, and a screw positioned in the body, the screw being adapted to turning in response to a turn of the operating portion, so that a force generated by the screw makes the chemical substance be propelled out of the body. In such a structure, since the screw turns in response to a turn of the operating portion, so that the chemical substance is propelled out of the body by a force generated by the screw, easy construction achieves propelling out.

Still another aspect of the present invention is to provide a pest controller including a solid chemical substance formed in a particular shape and containing an active ingredient with a pest-controlling effect, the active ingredient being volatilizable at a normal temperature, and a coat formed on the surface of the chemical substance so as to be exfoliated by a predetermined amount. In such a structure, if and when the exposing portion is reduced by consumption, removing the coat increases the exposing portion.

Yet another aspect of the invention is to provide a pest controller including a container holding therewithin a chemical substance formed in the shape of a rod, wherein the chemical substance contains an active ingredient with a pest-controlling effect, the active ingredient being volatilizable at a normal temperature, wherein the container has a pusher for pressing the chemical substance, and a chuck being adapted to holding and releasing the chemical substance so that the chemical substance is pushed out by pressing the pusher and held by the chuck, thereby the chemical substance is prevented from moving back. Such a structure makes sure to propel out the chemical substance and prevents it from moving back during use, thereby being easy to apply it.

The pest controller may include a heater for heating the chemical substance. Such a structure makes it possible to volatilize the chemical substance further more.

The container may include a container body holding the chemical substance therewithin, and a cap being separable from the body and being attached to the body so as to constitute the cover. In such a structure, there is provided with a cap being attached to the body so as to constitute the cover, so that the cover with simple structure is provided.

The container may be equipped with a holder for attaching the controller to a body. In such a structure, the container is equipped with the holder, thereby ensuring that the pest controller can be carried for use by hanging.

It may be constituted in such a manner that the container is of a tabular shape, and that the substance exposing portion is of a planar shape. Such a structure is provided with the substance exposing portion of wide area with a small size of the pest controller.

The cover for sealing the substance exposing portion may include a deformable sheet, the sheet being removable, so that the cover of substance exposing portion is detached by removing the sheet. In such a manner, a change of area from which the sheet is removed adjusts a volatilization of the chemical substance.

The container may be adapted to be directly worn and/or attached to clothes. Such a structure makes it easy to carry the pest controller.

The container may have an attaching member for attaching the controller to a body. Such a structure makes it easy to attach the pest controller onto clothes. A body to which the controller is attached may be clothes or any article in a spot for controlling pests, for example, an outdoor tent.

At least a part of the container may be made of biodegradable resin. In such a structure, since at least a part of the container is made of biodegradable resin, it is possible to dispose of wastes of the pest controller by biodegradation.

The pest controller may include a cover for sealing the substance exposing portion, wherein the cover comprises a deformable sheet, the sheet being removable, so that the cover of substance exposing portion is detached by removing the sheet. Such a structure makes it possible to use the controller readily by detaching the cover of substance exposing portion.

Yet still another aspect of the present invention is to provide a pest controller including a portable and airtight bag, wherein the bag is adapted to release a sealing condition by releasing an airtightness, and wherein the bag accommodates a fiber soaked with a chemical substance, the chemical substance containing an active ingredient with a pest-controlling effect against harmful pests for human body, the active ingredient being volatilizable at a normal temperature. The controller can be used only by releasing the sealing condition.

A further aspect of the present invention is to provide a pest controller including a portable and air-permeable bag, wherein the bag incorporates a chemical substance, the chemical substance containing an active ingredient with a pest-controlling effect against harmful pests for human body, the active ingredient being volatilizable at a normal temperature. The controller makes it possible to control pests by carrying the bag.

It may be constituted in such a manner that the chemical substance is liquid and that the bag accommodates a substance absorbing member soaked with the chemical substance. Such a structure makes it possible to accommodate even the liquid chemical substance in the air-permeable bag.

The bag may be equipped with an adhesive member being attachable to human body or clothes. In such a structure, the controller is fixed to clothes readily.

The active ingredient may have a vapor pressure at 25°C by Donovan method within a range of 1 x 10⁻⁵ mmHg to 5 x 10⁻³ mmHg, thereby being apt to volatilize and bringing a sufficient pest-controlling effect without making the substance releasing portion big.

The active ingredient may be a pyrethroid compound, thereby bringing an excellent pest-controlling effect against insects and so on with small amount and a high safety for human when the controller is used.

The chemical substance may contain a sublimable dyestuff. In this case, the dyestuff sublimates with the active ingredient of the substance, thereby informing an effective period of the substance.

The pest controller described above gets rid of pests. A method for controlling pests is carried out by opening the cover of the pest controller at a spot for controlling pests so as to volatilize the chemical substance containing the active ingredient into the air from the substance releasing portion. Another method is carried out by contacting the applicator with a spot for controlling pests to apply the substance on the spot so as to volatilize the substance containing the active ingredient into the air. These methods for controlling pests with the pests controller get rid of pests.

### BRIEF DESCRIPTION OF THE DRAWINGS

Fig. 1A is a top plan view of a pest controller provided in a first embodiment of the present invention;
Fig. 1B is a front view of the pest controller provided in the first embodiment of the present invention;
Fig. 2A is a cross-sectional view of the pest controller provided in the first embodiment of the present invention taken along line A-A of Fig. 1A;
Fig. 2B is an enlarged partially sectional view of Fig. 2A;
Fig. 3 is a perspective view of a pest controller provided in another embodiment of the present invention;
Fig. 4 is a cross-sectional view of a pest controller provided in still another embodiment of the present invention;
Fig. 5 is a cross-sectional view of a pest controller provided in yet another embodiment of the present invention;
Fig. 6 is a cross-sectional view of a pest controller provided in yet still another embodiment of the present invention;
Fig. 7A is a top plan view of a pest controller provided in a second embodiment of the present invention;
Fig. 7B is a front view of the pest controller provided in the second embodiment of the present invention;
Fig. 8 is a cross-sectional view of the pest controller provided in the second embodiment of the present invention taken along line B-B of Fig. 7A;
Fig. 9 is a cross-sectional view of the pest controller shown in Fig. 8 in a state propelling out a chemical substance;
Figs. 10A-10C are exploded views of the pest controller provided in the second embodiment of the present invention, Fig. 10A being a cross-sectional view of a cap, Fig. 10B being a cross-sectional view of a chemical substance, and Fig. 10C is a cross-sectional view of a container;
Fig. 11 is a perspective view of a pest controller provided in a third embodiment of the present invention;
Fig. 12 is a perspective view showing a substance releasing member and a substance holder of the pest controller provided in the third embodiment of the present invention;
Fig. 13 is a perspective view of a pest controller provided in a fourth embodiment of the present invention;
Fig. 14 is a partially sectional view of the pest controller provided in the fourth embodiment of the present invention during non-use;
Fig. 15 is a perspective view of the pest controller provided in the fourth embodiment of the present invention during use;
Fig. 16 is a partially sectional view of the pest controller provided in the fourth embodiment of the present invention during use;
Fig. 17 is a perspective view of a pest controller provided in a fifth embodiment of the present invention;
Fig. 18 is a perspective view of a pest controller provided in a sixth embodiment of the present invention;
Fig. 19 is a perspective view of a pest controller provided in a seventh embodiment of the present invention;

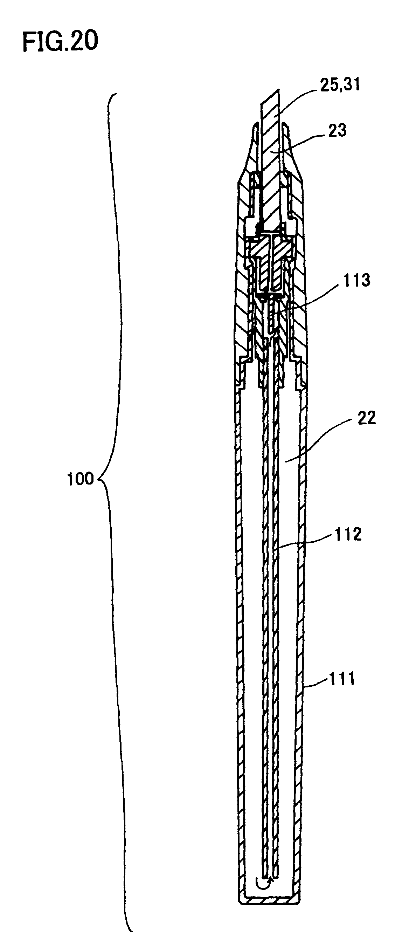

Fig. 20 is a cross-sectional view of a pest controller provided in an eighth embodiment of the present invention;
Fig. 21 is a cross-sectional view of a pest controller provided in a ninth embodiment of the present invention;
Fig. 22 is a cross-sectional view of a pest controller provided in a modification of the ninth embodiment of the present invention;

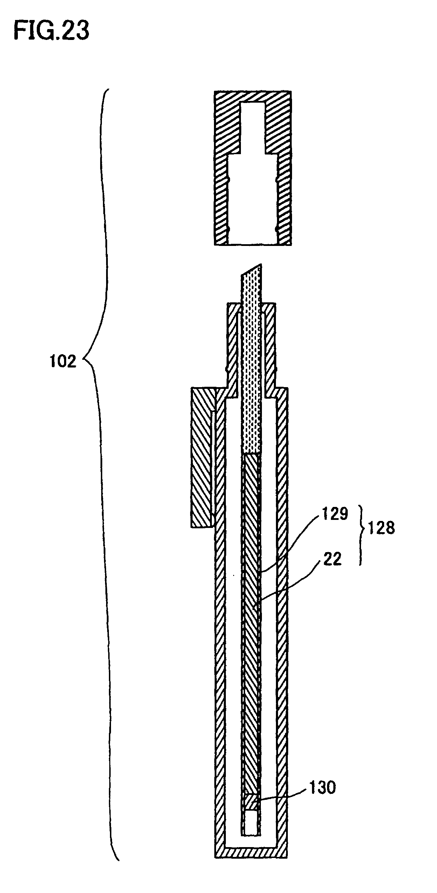

Fig. 23 is a cross-sectional view of a pest controller provided in a tenth embodiment of the present invention;
Fig. 24 is a perspective view of a pest controller provided in a eleventh embodiment of the present invention;
Fig. 25 is a perspective view of a pest controller provided in a twelfth embodiment of the present invention;
Fig. 26 is a perspective view of a pest controller provided in a thirteenth embodiment of the present invention;
Figs. 27A and 27B are partially sectional views of the pest controller provided in a thirteenth embodiment of the present invention;
Fig. 28 is a perspective view of a cup used for a test example 1 and a test example 2;
Fig. 29 is a perspective view of a pest controller and a cup illustrating a state of the test example 1;
Fig. 30 is a perspective view of a filter paper and a cup illustrating a state of the test example 2;
Figs. 31A and 31B are perspective views of a pest controller provided in a fourteenth embodiment of the present invention;
Fig. 32 is a perspective view of a pest controller provided in a fifteenth embodiment of the present invention;
Fig. 33 is a perspective view of a pest controller provided in a modification of the fifteenth embodiment of the present invention;
Fig. 34 is a perspective view of a pest controller provided in a sixteenth embodiment of the present invention;
Fig. 35 is a front view of a pest controller provided in a seventeenth embodiment of the present invention;
Fig. 36 is a perspective view of a pest controller provided in a eighteenth embodiment of the present invention;
Fig. 37 is a front view of a pest controller provided in a nineteenth embodiment of the present invention;
Fig. 38 is a side view of a pest controller provided in a twentieth embodiment of the present invention;
Fig. 39 is a perspective view of a pest controller provided in a twenty-first embodiment of the present invention;
Fig. 40 is a perspective view of a pest controller provided in a twenty-second embodiment of the present invention;
Fig. 41 is a perspective view of a pest controller provided in a twenty-third embodiment of the present invention;
Fig. 42 is a front view of a pest controller provided in a twenty-fourth embodiment of the present invention;
Fig. 43 is a front view of a pest controller provided in a twenty-fifth embodiment of the present invention;
Fig. 44 is a perspective view of a pest controller provided in a twenty-sixth embodiment of the present invention;
Fig. 45 is a perspective view showing a bag of the pest controller provided in a twenty-sixth embodiment of the present invention;
Fig. 46 is a perspective view showing inside of Fig. 45;
Fig. 47 is a perspective sectional view of a pest controller provided in a twenty-seventh embodiment of the present invention;
Fig. 48 is a front view of a pest controller provided in a twenty-eighth embodiment of the present invention;
Fig. 49 is a perspective view of the pest controller provided in the twenty-eighth embodiment of the present invention during use.

### DESCRIPTION OF THE PREFERRED EMBODIMENTS

Now typical embodiments of the present invention will be described below, making reference to the accompanying drawings.

Pest controllers described below are all portable and preferably a pocketable size. More particularly, it is preferable to have a length of about 150mm or less and a weight of 50g or less, and more preferably, a length of about 120mm or less and a weight of 20g or less.

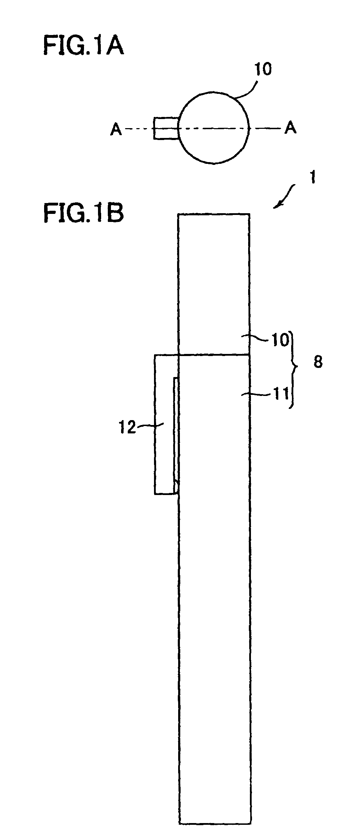

A pest controller 1 provided in a first embodiment of the present invention has a structure shown in Fig. 1. The pest controller 1 has such a structure as a marking pen.

The pest controller 1 includes a container 8. The container 8 consists essentially of a container body 11 of a cylindrical shape and a cap 10 attached to a distal end of the body 11. The length of container 8 is about 150mm. The body 11 is equipped with a clip 12.

The clip 12 is a holder for attaching the controller to a foreign body and provided on a trunk of the body 11. Therefore, a cloth such as a pocket of garments may get sandwiched between the clip 12 and the trunk of the body 11. The attachment of the pest controller 1 onto garments prevents it from falling off from users wearing the garments in case of carrying it.

The container 8 and the cap 10 are preferably made of such materials as unaffected even if being in contact with a chemical substance 22 described below. More particularly, they can be made of any resin such as polyethylene resin, polypropylene resin, polyamide resin, polystyrene resin, polyacetal resin, and polyethylene terephthalate resin, or of any metal such as aluminum and stainless steel, though polyamide resin may be preferably used.

Further, the use of biodegradable plastic as materials of the container 8 and the cap 10 is environment friendly because the container 8 and the cap 10 are degradable by bacteria or the like. Biodegradable plastics include starch-added plastics to which a starch is added, microorganism-produced plastics composed of polyester generated by microorganism, and synthetic plastics made by chemical syntheses. The same materials as described above may be used for other embodiments of the present invention.

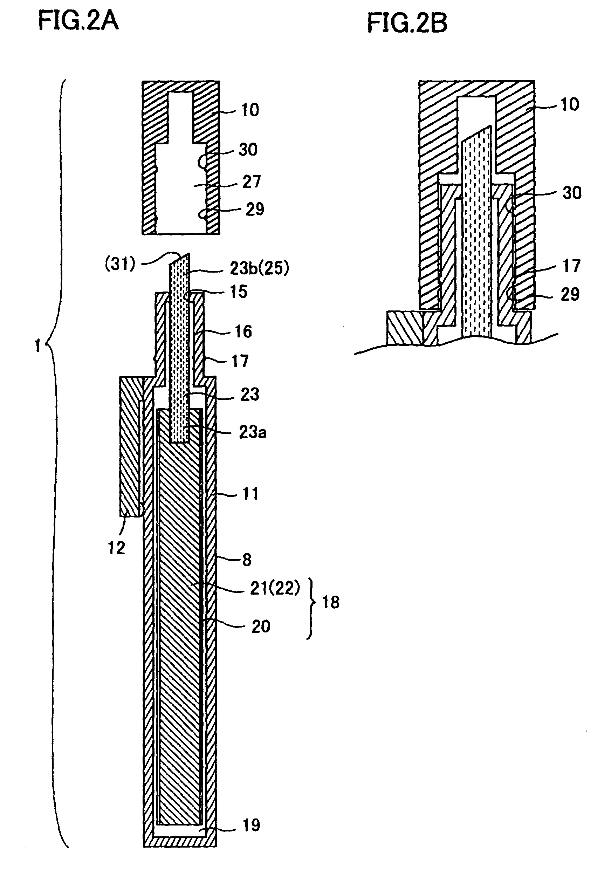

Now, a structure of the pest controller 1 will be described below further in detail, referring to Fig. 2.

The container body 11 is of a cylindrical shape having an opening 15 at a distal end (upper part in Fig. 2A), and a portion 16 with reduced diameter in a trunk of the distal end, an outside diameter of the portion 16 with reduced diameter being smaller than that of a proximal end. The portion 16 with reduced diameter has a body-side projection 17 provided circumferentially, that contacts closely to the inner surface of the cap 10 in case of installing.

As seen in Fig. 2, the container body 11 has an inner space 19 with a wick 18. The wick 18 is of a cylindrical shape, and consists essentially of a wick cover 20 and a fiber portion 21. The wick cover 20 is made of resin film and of a cylindrical shape, and covers the fiber portion 21. The wick 18 functions as a liquid substance storage.

The fiber portion 21 is formed cylindrically by such fibers as polyester fiber, polyacrylate fiber, and cotton, and is soaked with the chemical substance 22 in which an active ingredient described below is dispersed. That is, the fiber portion 21, which absorbs the chemical substance, functions as a substance retaining member.

The chemical substance 22 is liquid and contains at least one active ingredient with a pest-controlling effect and being volatilizable at a normal temperature. Typical examples of the volatile active ingredient that is volatilizable at a normal temperature include pyrethroid compounds such as empenthrin, 2,3,5,6-tetrafluoro-4-methoxymethylbenzyl 3-(1-propenyl)-2,2-dimethylcyclopropanecarboxylate (hereinafter also called as chemical substance (A)), 2,3,5,6-tetrafluoro-4-methoxymethylbenzyl 3-(2-methyl-1-propenyl)-2,2-dimethylcyclopropanecarboxylate, 1-ethynyl-2-methyl-2-pentenyl 3-(2-chloro-2-fluorovinyl)-2,2-dimethylcyclopropane-1-carboxylate, 2,3,5,6-tetrafluoro-4-methylbenzyl 3-(2-methyl-1-propenyl)-2,2-dimethyl-cyclopropanecarboxylate, 2,3,5,6-tetrafluoro-4-methylbenzyl 3-(2-chloro-2-fluorovinyl)-2,2-dimethylcyclopropanecarboxylate, 2, 3, 5, 6-tetrafluoro-4-methylbenzyl 3-(1-propenyl)-2,2-dimethylcyclopropanecarboxylate, 1-ethnyl-2-fluoro-2-pentenyl 3-(2,2-dichlorovinyl)-2,2-dimethyl-cyclopropanecarboxylate, 1-ethynyl-2-methyl-2-pentenyl 3-(2,2-dichlorovinyl)-2,2-dimethylcyclopropanecarboxylate, transfluthrin, terallethrin, furamethrin, tefluthrin, prallethrin, and allethrin, organophosphorus compounds such as fenitrothion and dichlorvos, carbamate compounds such as BPMC and metoxadiazone, juvenile hormone-like compounds such as methoprene and hydroprene, 3,4-caranediol, N,N-diethyl-m-toluamide, p-menthan-3,8-diol, and plant essential oil such as hyssop oil.

These active ingredients are mostly liquid at a normal temperature and available as the above-identified chemical substances.

Further, the active ingredient used in the present invention preferably has the vapor pressure at 25°C by Donovan method within a range of 1 x 10⁻⁵ mmHg to 5 x 10⁻³ mmHg.

Donovan method is a method reported by Mr. Stephen F. Donovan in New method for estimating vapor pressure by the use of gas chromatography: Journal of Chromatography A. 749, pp. 123-129 (1996).

Normally, an active ingredient being liquid at a normal temperature may be used by filling in a container for holding the active ingredients described below, though it is possible to fill in the container 8 the liquid chemical substance diluted with one selected from a group consisting of alcohol such as ethanol and isopropyl alcohol, polyhydric alcohol such as polyethylene glycol, 1,3-butylene glycol, ethylene glycol monobutyl ether, propylene glycol monomethyl ether, and dipropylene glycol monomethyl ether, hydrocarbon solvent such as isopentane, light isoparaffin, light liquid isoparaffin (Idemitsu Petrochemical : IP solvent 1620, 2028, 2835 Exxon Mobil: Isopar E, G, H, L, M), JIS first and second kerosene, and alkylbenzene, and esters such as ethyl acetate, isopropyl myristate, diisopropyl adipate, and tributyl acetylcitrate, or a mixture thereof.

The chemical substance 22 may be also added a colorant such as a dyestuff. In this case, the use of a transparent container enables users to readily know a rest of the substance 22 during use. Especially, a sublimable dyestuff may be useful as a colorant of a pest controller applying the substance 22 to be used. More specifically, the colorant sublimates in using the substance 22, so that a pest-controlling effect can be judged by ensuring a color of an applied spot. The colorant does not remain after use, so that the applied spot does not become dirty.

The container body 11 further includes a fiber bundle 23 adjacent to the opening 15.

The fiber bundle 23 is of substantially a columnar shape, a distal end being slant to have an angle relative to a vertical face to the axial direction. An outer diameter of the fiber bundle 23 is substantially equal to an inner diameter of the opening 15. The fiber bundle 23 penetrates the opening 15 in a fitting state. The fiber bundle 23, inside the container body 11, has a contacting portion 23a for contacting with the fiber portion 21 of the wick 18, and outside the body 11, has an exposing portion 23b exposed out of the opening 15.

In this embodiment, the fiber bundle 23 is a different member from the wick 18, though it may be the same member.

The cap 10 is attachable to the body 11. Attachment of the cap 10 makes the exposing portion 23b be covered, that is, the cap 10 becomes a cover for sealing the exposing portion 23b. On the other hand, detachment of the cap 10 makes the exposing portion 23b be made open.

The cap 10 is attached to a distal end of the body 11, the outer diameter of the cap 10 being substantially equal to that of the body 11. The inner diameter of thereof has two steps, which of an inner portion 27 at a proximal end of the cap 10 is substantially equal to the outer diameter of the portion 16 with reduced diameter of the body 11. Further, as seen in Fig. 2B, when the cap 10 is covered, the inner portion 27 at the proximal end of the cap 10 has a cap-side projection 29 placed at slightly nearer to the proximal end than a place corresponding to the body-side projection 17, and a sealing projection 30 placed at a further distal end than a place corresponding to the body-side projection 17. Therefore, when the cap 10 is covered on the body 11, the body-side projection 17 is fixed after exceeding the cap-side projection 29, and further, the sealing projection 30 is fitted onto the portion 16 with reduced diameter of the body 11.

Next, a method for using the pest controller 1 will be described in detail below.

The cap 10 is removed at a spot for controlling insects to use the pest controller 1, so that the exposing portion 23b is released from the sealing condition.

Since the fiber bundle 23 contacts with the wick 18 by the wick-contacting portion 23a of the former and the fiber portion 21 of the latter, the chemical substance 22 is absorbed by capillarity up to the exposing portion 23b, thereby being exposed on the surface of the exposing portion 23b. That is, in the present embodiment, the fiber bundle 23 has both functions of a substance lead-out member for leading out the chemical substance and a substance exposing portion for exposing the chemical substance on the surface of the body 11.

Consequently, when the cap 10 is removed, the chemical substance 22 becomes contactable with open air and starts volatilizing. Empenthrin, an active ingredient with a pest-controlling effect, brings an excellent pest-controlling effect by volatilizing. At this time, as described above, the exposing portion 23b functions as a substance releasing portion 25.

While an amount of the chemical substance 22 is released from the exposing portion 23b, a further amount of the chemical substance 22 is transmitted to the exposing portion 23b by capillarity. If and when being reduced, the chemical substance 22 volatilizes from the exposing portion 23b by the capillarity of the wick 18 and the fiber bundle 23 until the chemical substance 22 in the container body 11 has been used up. That makes it possible to use it up to the last.

Since the pest controller 1 includes the container 8, the length of which is about 150mm, and the clip 12, it may be readily hung on such as a pocket of garments, so that it is convenient for carrying it.

The pest controller 1, as described above, is used for controlling pests not only by means of removing the cap 10 and releasing the chemical substance 22, but also by means of application of the chemical substance 22 on working suits or the like. More specifically, a top end 23c of the fiber bundle 23 functions as a substance applicator 31. When the chemical substance 22 is applied on the suits by the substance applicator 31, empenthrin, an active ingredient, volatilizes from a spot on which the chemical substance 22 is applied, so as to bring a pest-controlling effect.

It is also available to apply the chemical substance 22 on such as a cloth and a paper, not limited to garments like working suits, and put them on the spot for controlling pests. Further, for example, drawing a circle or an enclosure on a paper or a cloth, in which a foreign body to be pest-controlled is placed, makes inside the enclosure a pest-controlling atmosphere, thereby preventing pests from entering the enclosure.

The pest controller in the first embodiment is adapted to have the chemical substance 22 in the inner space 19 of the container body 11 through the wick 18. However, it may be constituted only by a fiber and a chemical substance in the inner space 19 of the container body 11 without the wick cover 20 of the wick 18 and also only by a chemical substance. Further, it may be constituted in such a manner having a through-hole in a part of the wick cover 20 so as to volatilize a chemical substance. The wick 18 may be hardened by use of resin or the like.

These pest controllers may be used again by filling the chemical substance 22 in case of using up the chemical substance 22. In the case, it is economical to be able to use the container body 11 many times It may be also referred to have a structure of a cartridge replacement type of the wick 18.

In the embodiment, the exposing portion 23b as the substance releasing portion 25 and the top end 23c as the chemical applicator 31 are made of fiber, but they may be only a member transmittable of the chemical substance 22, that is, a porous body or a resin precast product having a hollow through-hole may be employed as materials for the exposing portion 23b and the top end 23c.

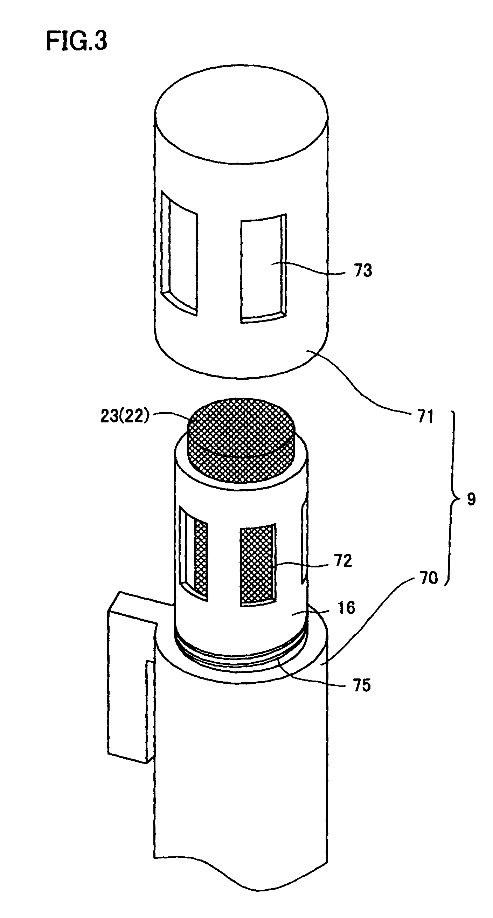

Further, a container 9 having a structure shown in Fig. 3 may be employed. More specifically, the container 9 includes a container body 70 and a cap 71. A portion 16 with reduced diameter of the body 70 has a side hole 72 slightly longer in an axial direction and communicating inside with outside. The cap 71 has a side hole 73 slightly longer in an axial direction and communicating inside with outside. The inner diameter of the cap 71 is substantially equal to the outer diameter of portion 16 with reduced diameter of the body 70. The cap 71 is adapted to be attachable to the body 70 by turning by a screw 75. A distal end of the body 70 exposes a fiber bundle 23 that is soaked with the chemical substance 22 in the body 70.

The use of the pest controller employing the container 9 shown in Fig. 3 facilitates an adjustment of volatile amount of the chemical substance 22. More specifically, changing of an angle of the body 70 and the cap 71 changes a relative position between the side hole 72 of the body 70 and the side hole 73 of the cap 71.

When the positions of the side holes 72 and 73 correspond to each other, effective areas of the holes communicating with inside and outside of the container 9 are wide, thereby achieving a high volatility. When the positions do not correspond to, the areas are small, resulting in a low volatility. The areas may be adjusted in stepless fashion.

In other words, the present embodiment has a window, which is changeable of its opening area, constituted by the side holes 72 and 73 at the distal end of the container 9.

As well as the pest controller 1 in the first embodiment of the present invention, it may be used by removing the cap 71 or by applying the chemical substance 22.

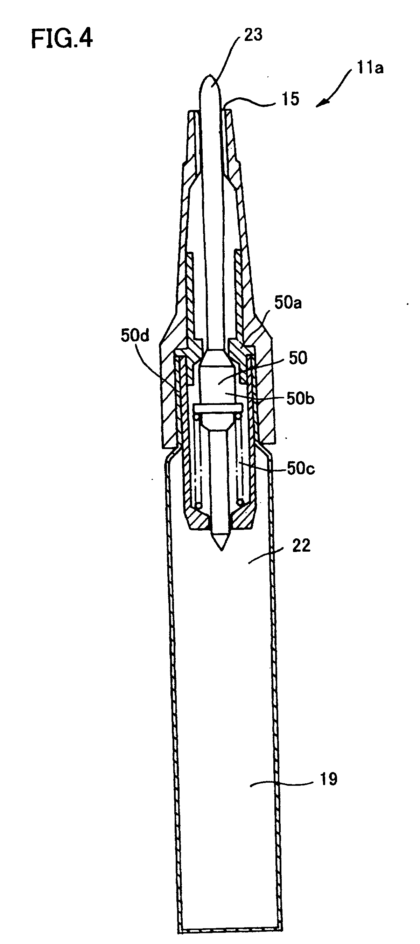

Still further, as seen in Figs. 4, 5 and 6, the present invention may employ a container body without a substance retaining member.

In other words, in a container body 11a shown in Fig. 4, the chemical substance 22, which is liquid, is directly filled in an inner space 19 of the body 11a without the substance retaining member. As well as the container body 11 of the pest controller 1 in the first embodiment, a fiber bundle 23 is provided at an opening 15 of a top of the body 11a. A valve system 50 is also provided between a proximal end of the fiber bundle 23 and the chemical substance 22, normally the valve system 50 being closed. Pushing the fiber bundle 23 in a direction of the proximal end opens the valve system 50, so that the chemical substance 22 in the inner space 19 is volatilizable through the fiber bundle 23.

More specifically, the valve system 50 is provided with a valve body 50b movably in a valve chamber 50a, the valve body 50b being pressed by a spring 50c in a direction of a valve seat 50d. Pushing the fiber bundle 23 in a direction of the proximal end moves the valve body 50b adjacent thereto to resist the spring 50c, so as to open the valve by leaving from the valve seat 50d.

In case of using the pest controller in the embodiment, the chemical substance 22 filled in the inner space 19 of the body 11a is led out by pushing the fiber bundle 23 to open the valve system 50, thereby ensuring that the chemical substance 22 in the inner space 19 is transmitted through the fiber bundle 23 to the distal end of fiber bundle 23 so as to volatilize outside.

The pest controller employing the container body 11a holds a large amount of the chemical substance 22 as it dispenses with the substance retaining member, thereby being used for a long time. Further, pushing to open the valve system 50 leads a necessary amount of the chemical substance 22 out to the distal end of the fiber bundle 23 that is a substance exposing portion, resulting in making a desired amount of the chemical substance 22 volatilize.

Still further, a modified embodiment of a container body will be described in detail below.

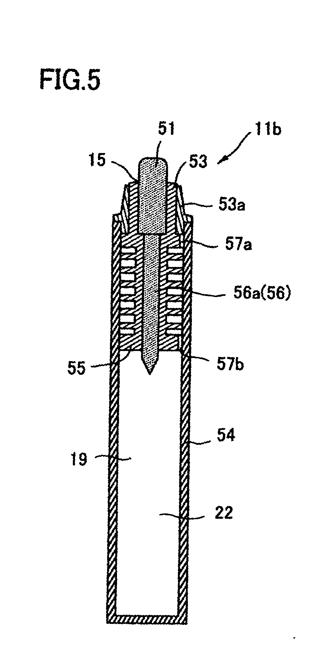

A container body 11b shown in Fig. 5 directly holds a chemical substance 22 in an inner space 19 of the body 11b as it dispenses with a substance retaining member as well as the container body 11a. The body 11b includes a holder 53 and a cylindrical container 54.

The holder 53 is substantially of a cylindrical shape and is provided with an opening 15 at a distal end, a through-hole 56 leading from the opening 15 and facing to an axial direction therewithin, and an intermediate wick 56a, which functions as a substance lead-out member, therewithin.

The outside of holder 53 has a step portion 55 that is sectionally pectinate. The step portion 55 has an outer pressure adjusting portion 57a communicating with outside and an inner pressure adjusting portion 57b communicating with inside. The holder 53 is inserted into the distal end of the cylindrical container 54 and fixed by a fixing member 53a.

The inner pressure adjusting portion 57b functions as a temporary receptacle, that is, depending on a pressure change in the container, a chemical substance is received at the temporary receptacle in case of a high pressure, thereby restricting an unnecessary volatilization of the chemical substance.

The opening 15 holds a resin mold part 51 that is a porous body. The resin mold part 51 has a gap, so that the chemical substance 22 passes through the resin mold part 51 so as to penetrate the inside and outside of container.

In case of using the pest controller, the chemical substance 22 is absorbed in the resin mold part 51 by turning the top downwardly, is led out by a porous structure of the resin mold part 51, and exposes to the distal end of the resin mold part 51, so as to volatilize it by contacting with air. The pest controller employing the container body 11b holds a large amount of the chemical substance 22 as it dispenses with the substance retaining member, thereby being used for a long time. Further, due to the step portion 55, even if the chemical substance 22 or air inside the inner space 19 expands with a change of temperature in the inner space 19, the chemical substance 22 moves to the step portion 55 so as to be received therein, or the air gradually flows through the outer and inner pressure adjusting portions 57a and 57b so that an inner pressure is lowered, thereby ensuring that the chemical substance 22 does not voluminously creep out of the opening 15.

Still another embodiment of a container body will be described in detail below.

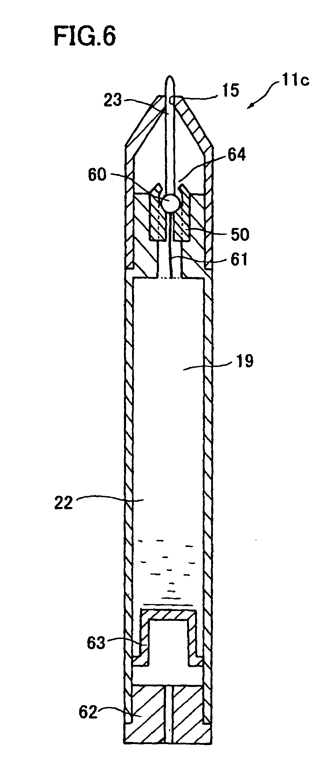

A container body 11c shown in Fig. 6 directly holds a chemical substance 22 in an inner space 19 of the body 11c as it dispenses with a substance retaining member as well as the container body 11a. The container body 11c further includes a fiber bundle 23 at a distal end of an opening 15 as well as the container body 11a. There is provided with a valve system 50 consisting essentially of a ball 60 and a biasing member 61 between a proximal end of the fiber bundle 23 and the chemical substance 22. The ball 60 is biased toward the distal end by the biasing member 61 and closes an opening 64 provided at the distal end of the valve system 50, normally the valve system 50 being closed. When the valve system 50 is closed, the chemical substance 22 inside the container body 11 does not leak outside.

Pushing the fiber bundle 23 in a direction of a proximal end opens the valve system 50, so that the chemical substance 22 in the inner space 19 turns volatilizable through the fiber bundle 23. More specifically, moving the ball 60 in a direction of the proximal end by applying a greater force than a biasing force of the biasing member 61 to the fiber bundle 23 opens the valve system 50. The container body 11c further includes a tail stopper 62 at the proximal end and a follower 63 between the tail stopper 62 and the chemical substance 22. The follower 63 is made of resin and provided at the proximal end of the chemical substance 22.

In case of using the pest controller, the chemical substance 22 is let volatilize by pushing the fiber bundle 23. The pest controller employing the container body 11c holds a large amount of the chemical substance 22 as it dispenses with the substance retaining member, thereby being used for a long time. Further, in the container body 11c, the follower 63 moves to the distal end depending on a reduction of the chemical substance 22. Therefore, that brings less deterioration of the chemical substance 22 because it does not contact with air.

Next, a second embodiment of the present invention will be described below.

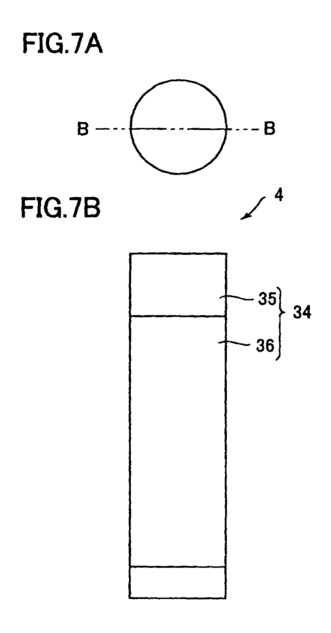

A pest controller 4 in the second embodiment of the invention, shown in Fig. 7, holds a solid chemical substance 41 and includes a container 34, which consists essentially of a container body 36 and a cap 35.

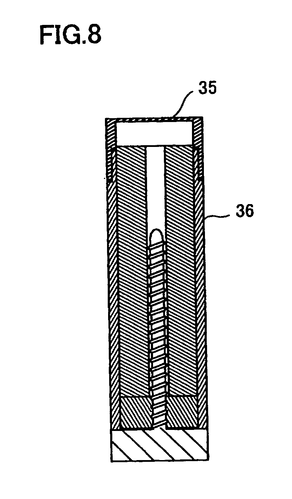

Structure inside the pest controller 4 will be described in detail below, making reference to Figs. 7 - 10.

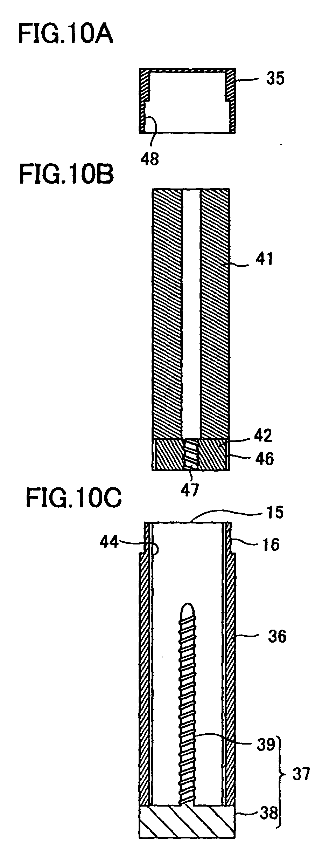

The container body 36, as seen in Fig. 10, is of a cylindrical shape having an opening 15 at a distal end and a portion 16 with reduced diameter at a trunk of the distal end. The outer diameter of the portion 16 with reduced diameter is smaller than that of the proximal end. The body 36, as seen in Fig. 10C, further includes ribs 44 in an axial direction therewithin.

The body 36 still further includes a propelling portion 37, which is of a disc shape having a threaded rod at its center and is attached to the proximal end of the body 36 with being turnable.

The propelling portion 37 consists essentially of an operating portion 38 and a threaded rod 39 (i.e. screw). The operating portion 38 is exposed outside and turnable relative to the body 36. The threaded rod 39 has a spiral projection and the length of the threaded rod 39 is slightly shorter than that of the body 36.

The body 36 holds a chemical substance 41 therewithin. Referring to Fig. 10B, the chemical substance 41 is of a cylindrical shape having a cavity therewithin. The chemical substance 41 has the same active ingredient as the pest controller 1 in the first embodiment. The chemical substance 41 is formed in a particular shape in semisolid or solid state. In use of a liquid active ingredient, a particular shape is formed by such as a gelling agent or a solid additive.

The body 36 has a movable member 42 at a proximal end of the chemical substance 41. The movable member 42 has a threaded hole 47 at its center in mesh with the threaded rod 39, and grooves 46 engaging with the ribs 44 in an axial direction at an outside thereof.

The chemical substance 41 inserted in the container body 36 is propelled out by turning the propelling portion 37. That is, the threaded rod 39 is inserted into the threaded hole 47 of the movable member 42, and the grooves 46 are engaged with the ribs 44. Consequently, turning the operating portion 38 of the propelling portion 37 turns the threaded rod 39. Hence, an engagement of the ribs 44 and the grooves 46 prevent the body 36 and the movable member 42 from turning, so that the movable member 42 moves in an axial direction in a pitch of the threaded rod 39. In other words, a force generated by the threaded rod 39 makes the chemical substance 41 be propelled out of the body 36.

The cap 35, as seen in Fig. 10A, is attached to a distal end of the body 36, the outer diameter of the cap 35 being substantially equal to that of the body 36. The inner diameter has two steps, which of an inner portion 48 at a proximal end is substantially equal to the outer diameter of the portion 16 with reduced diameter of the body 36.

The cap 35 is attachable to the body 36. Attachment of the cap 35 seals further distal end than the portion 16 with reduced diameter of the body 36. Thus, the opening 15 is sealed with the cap 35 and released without the cap 35, so that the chemical substance 41 is exposed out of the body 36. That is, the chemical substance 41 comes in contact with air.

Next, a method for using the pest controller 4 will be described in detail below.

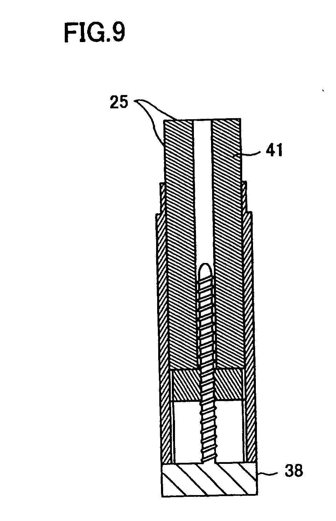

Removing the cap 35 at a spot for controlling pests releases the opening 15 of the body 36 from the sealing condition. Then turning the propelling portion 37 propels the chemical substance 41 out. As seen in Fig. 9, an active ingredient volatilizes by exposing the faces of top and side of the chemical substance 41. In the embodiment, the faces of top and side of the substance 41 functions as a substance releasing portion 25. Since the active ingredient has a pest-controlling effect and is volatilizable at a normal temperature, the active ingredient volatilizes and brings an excellent pest-controlling effect. Changing a length of the chemical substance 41 that is propelled out changes an area of the substance releasing portion 25, thereby readily changing a level of the pest-controlling effect. Further, the faces of top and side of the chemical substance 41 of the pest controller 4 may function as a chemical applicator 31.

A propel-out system of the invention may employ the known propel-out system that is not the one in the pest controller 4 in the second embodiment, or may not employ a rotary type.

Next a third embodiment of the present invention will be described in detail below.

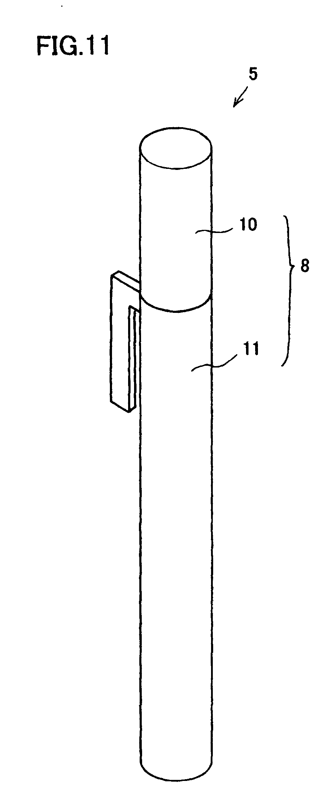

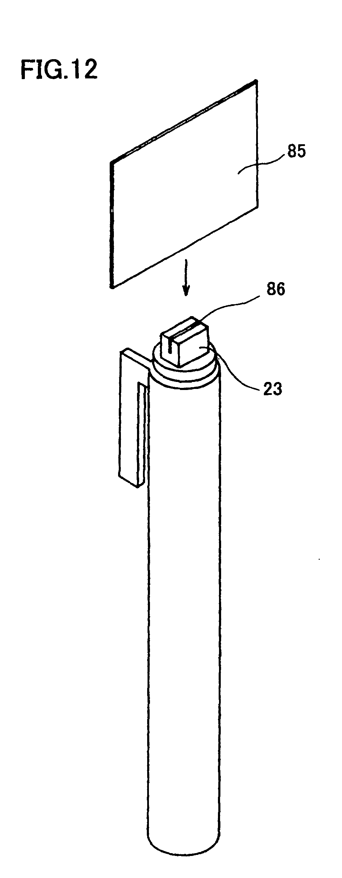

A pest controller 5 in the third embodiment of the present invention is illustrated in Figs. 11 and 12. The pest controller 5 includes a substance releasing member 85 and a holder 86 for holding the substance releasing member 85 at a top of a fiber bundle 23. Structure except the holder 86 and the substance releasing member 85 is the same as the structure of the pest controller 1 shown in Fig. 2, so that detailed description on those members depicted with the same reference numerals as the pest controller 1 will not be repeated hereinafter.

The substance releasing member 85 is of a tabular shape and separately provided. Preferably, the substance releasing member 85 is made of such a material that readily absorbs a liquid by capillarity, such as paper that is made of fine fiber, or a body with a number of small halls. An area and a thickness of the substance releasing member 85 may be selected properly, the latter being in such a range in which the member is held between the holder 86 described below. The substance releasing member 85 has a flexibility, which makes it so compact as to be readily carried by winding up or folding it during non-use.

The holder 86 is specifically a slit situated on a top of the fiber bundle 23. The face of the slit is parallel with the axis of the pest controller 5.

In case of using the pest controller 5, as seen in Fig. 12, the substance releasing member 85 is to be placed in the holder 86 of the fiber bundle 23. The chemical substance 22 absorbed into the distal end of the fiber bundle 23 further infiltrates in to the substance releasing member 85, thereby volatilizing from the substance releasing member 85.

By the pest controller 5 with the structure described above, the wider area of the substance releasing member 85 is made, the wider area the chemical substance 22 volatilize from. Referring to Fig. 11, during non-use, attachment of the cap 10 to the container body 11 prevents the chemical substance 22 from volatilizing and it is also possible to make the substance releasing member 85 to a portable size.

Further, a fourth embodiment of the present invention will be described in detail below.

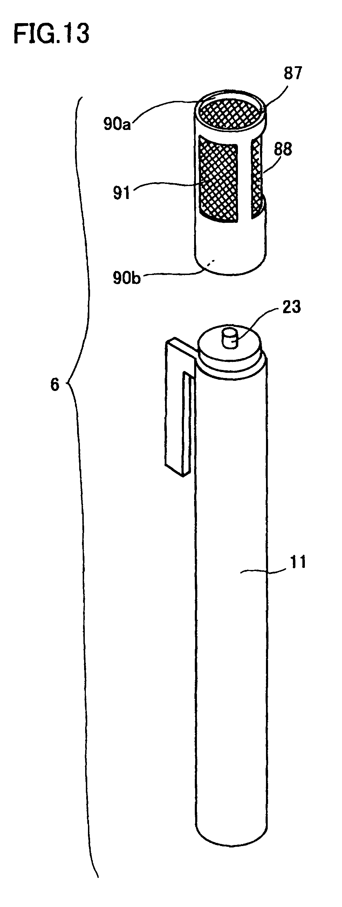

A pest controller 6 in the fourth embodiment of the invention is illustrated in Figs. 13-16. The pest controller 6 includes a container body 11 and an attachment 87 attachable to the body 11. In the embodiment, the attachment 87 functions as both a cap and a substance releasing member. Structure of the pest controller 6 except the attachment 87 and a connecting portion of the body 11 to the attachment 87 is the same as the structure of the pest controller 1 shown in Fig. 2, so that detailed description on those members depicted with the same reference numerals as the pest controller 1 will not be repeated hereinafter.

The attachment 87, both the cap and the substance releasing member, is of a cylindrical shape and has an opening 88 on a trunk thereof. Opposite ends 90a and 90b of a tube of the attachment 87 are both open and attachable to the body 11. The attachment 87 is provided with a separator 89 for dividing the end 90a and the end 90b.

The attachment 87 is provided with a substance releasing member 91 within a space enclosed by the separator 89, the trunk of the opening 88, and the end 90a. Preferably, the substance releasing member 91 is made of such material that readily absorbs a liquid by capillarity and that is apt to act capillarity, for example, made of fiber or with a number of small halls. The substance releasing member 91 has elasticity. In case of attaching the attachment 87 to the end 90a of the body 11, the substance releasing member 91 is pushed to be dented by a top of the fiber bundle 23, thereby ensuring that the top of the fiber bundle 23 comes into contact with the substance releasing member 91.

The substance releasing member 91 communicates with the outside of attachment by the opening 88 so as to release the chemical substance 22 absorbed into the substance releasing member 91.

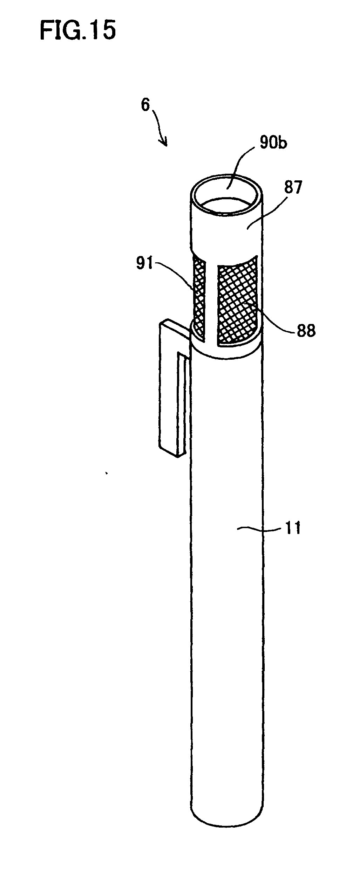

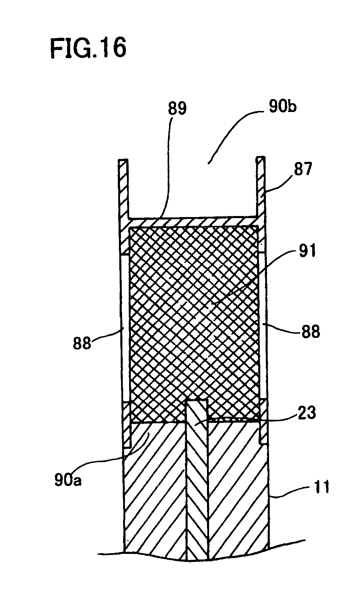

In case of using the pest controller 6, as seen in Figs. 15 and 16, the end 90a of the attachment 87 is to be attached to the body 11. The chemical substance 22 absorbed into the distal end of the fiber bundle 23 further infiltrates in to the substance releasing member 91. Thus, the chemical substance 22 absorbed into the substance releasing member 91 volatilizes from the opening 88.

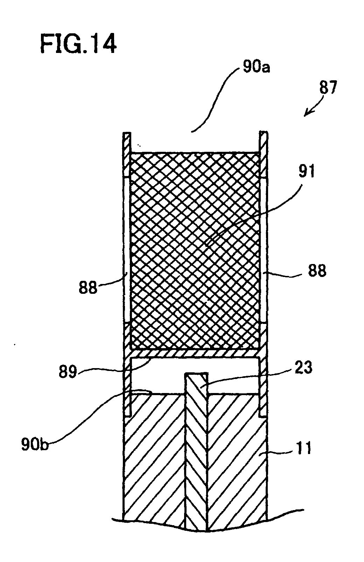

During non-use, as seen in Figs. 13 and 14, the end 90b of the attachment 87 is to be attached to the body 11. Thereby, the distal end of the fiber bundle 23 is sealed with the trunk of the attachment 87 and the separator 89, so as to prevent the chemical substance 22 from volatilizing.

The pest controller 6 is easy to carry due to the attachment 87 attached to the body 11 during both use and non-use.

Next, fifth and sixth embodiments of the present invention will be described in detail.

Pest controllers 7 and 7a in the fifth and sixth embodiments are adapted to apply a chemical substance by a rolling body such as a ball 92 and a roll 93.

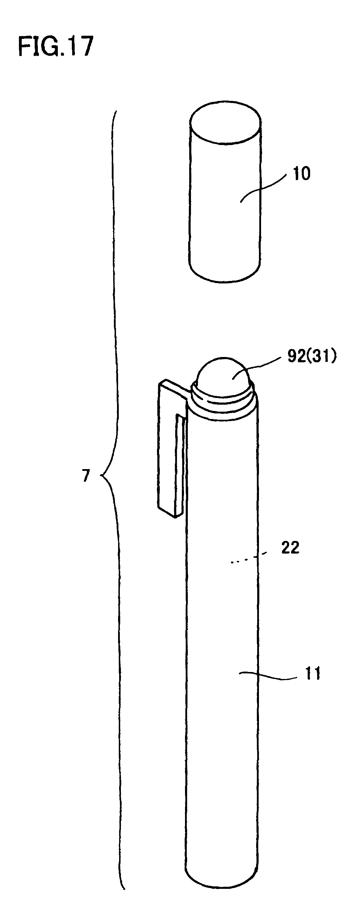

The pest controller 7 in the fifth embodiment of the invention is illustrated in Fig. 17. The pest controller 7 includes a container body 11 and the ball 92 held rotatably to the body 11. It is constructed in such a manner that the chemical substance 22 held in the body 11 is adhered to the ball 92. In the embodiment, the ball 92 functions as a substance applicator 31.

In case of using the pest controller 7, the chemical substance 22 is applied to a spot for controlling pests by removing a cap 10 and then moving the ball 92 with contacting the spot. More specifically, the ball 92 rotates adhering the chemical substance 22, thereby applying the chemical substance 22 to a part with which the ball 92 contacts. Then, the chemical substance 22 controls pests by volatilizing.

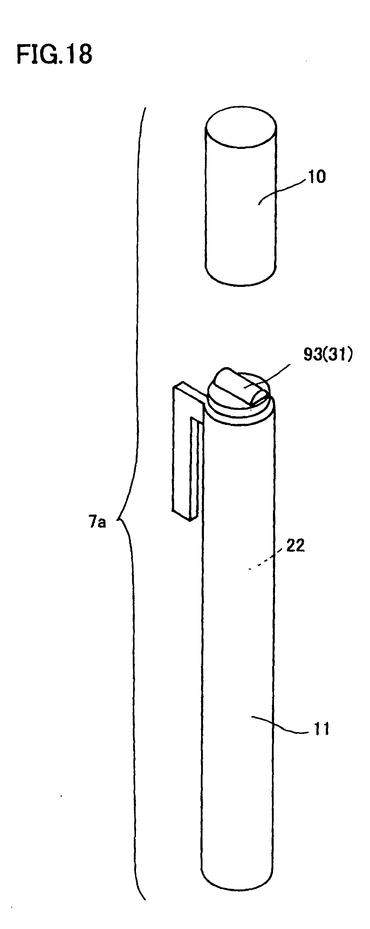

The pest controller 7a in the sixth embodiment of the invention is illustrated in Fig. 18. The pest controller 7a includes a container body 11 and the roll 93 held rotatably to the body 11. It is constructed in such a manner that the chemical substance 22 held in the body 11 is adhered to the roll 93. In the embodiment, the roll 93 functions as a substance applicator 31.

In case of using the pest controller 7a, the chemical substance 22 is applied to a spot for controlling pests by removing a cap 10 and then moving the roll 93 with contacting the spot. More specifically, the roll 93 rotates adhering the chemical substance 22, thereby applying the chemical substance 22 to a part with which the roll 93 contacts. Then, the chemical substance 22 controls pests by volatilizing.

Further, it may be possible, as a pest controller 7b in a seventh embodiment of the present invention, to heat the proximity of a substance releasing portion 25 in order to readily volatilize a chemical substance 22 further more during use.

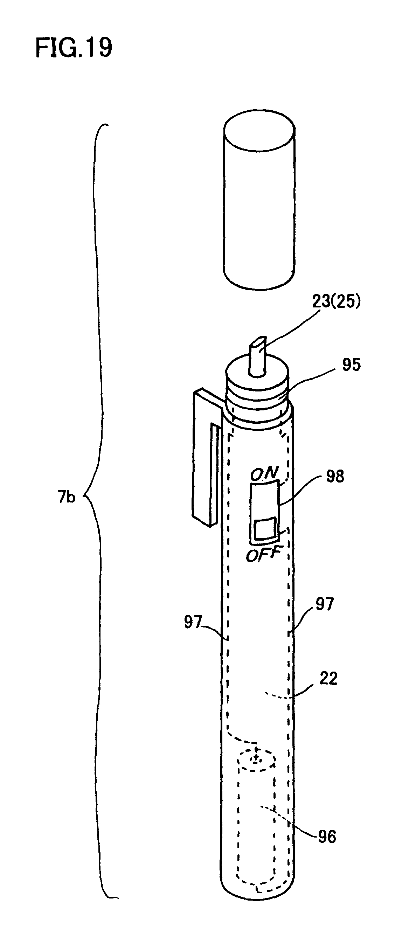

Referring to Fig. 19, the pest controller 7b includes an electric heater 95, a battery 96, leads 97 and a switch 98. The opposite poles of battery 96 are connected through the leads 97 to the heater 95. Only when the switch, which is positioned intermediately of a lead 97, is turned on, the heater 95 is heated. The heater 95 is placed adjacent to a distal end of a fiber bundle 23. In case of using the pest controller 7c, turning on the switch 98 heats the distal end and its proximity by the heater 95, thereby facilitating volatilization of a chemical substance 22 from the fiber bundle 23. A pest controller including a substance releasing portion 25 may be used as a pest controller of its high volatility by heating the substance releasing portion 25 and its proximity.

It is further possible that a part in which a chemical substance 22 is held within a container body 11 is to be adapted to be pressed so as to facilitate an application or a release of the chemical substance 22. In other words, a press of the part in which the chemical substance 22 is held causes a pressure difference between the atmospheric and the inner pressures, thereby facilitating a release of the chemical substance 22. Specifically, a deformable container may be employed as the container body 11 so that the volume of the part in which the chemical substance 22 is held is decreased by hand-grasping or the inner pressure of the body 11 may be increased by high pressure filling of the body 11 itself or a cartridge held within the body 11 and holding the chemical substance 22.

The pest controllers adapted to press the part in which the chemical substance 22 is held include pest controllers 100, 101, and 106.

The pest controller 100 in an eighth embodiment, as seen in Fig, 20, a container body 111 directly holds a chemical substance 22. The body 111 is made of soft resin and deformable by being compressed from outside. The body 111 includes a substance lead-out tube 112 therewithin. The substance lead-out tube 112 is provided with a valve system 113 at a distal end, and is open at a proximal end into which the chemical substance 22 in the body 111 is flown. The valve system 113 is normally closed, but is adapted to open in response to a rise of a pressure of the substance lead-out tube 112 side. In a closed condition of the valve system 113, the body 111 is airtight.

A fiber bundle 23 is provided at a distal end of the valve system 113. When the valve system 113 is open, the chemical substance 22 is transferred from the inside of body 111 through the substance lead-out tube 112 to the fiber bundle 23, being supplied to the fiber bundle 23.

In case of using the pest controller 100, a distal end of the fiber bundle 23 functions, as well as the pest controller 1, as a substance releasing portion 25 and a substance applicator 31. In case of supplying the chemical substance 22 to the fiber bundle 23, users press to deform the body 111 from outside with a distal end of the pest controller 100 upwardly. Then, as the volume of body 111 is decreased, an inner pressure thereof rises, and the pressure of the substance lead-out tube 112 side of the valve system 113 rises, thereby ensuring that the valve system 113 is open. Thus, the chemical substance 22 of the body 111 is supplied to the fiber bundle 23, so as to volatilize and apply the chemical substance 22 further more.

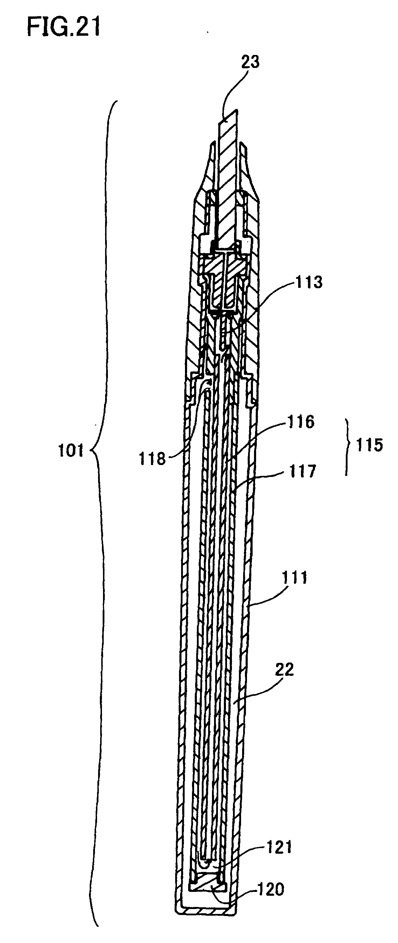

Referring to Fig. 21, a pest controller 101, a modification of the pest controller 100 in the eighth embodiment, has a structure wherein a substance lead-out tube 112 is only different from that of the pest controller 100. More specifically, as seen in Fig. 21, a substance lead-out tube 115 is provided with double tubes consisting of an inner tube 116 and an outer tube 117. The outer tube 117 has a substance introduction hole 118 at a distal end thereof, whereby a chemical substance 22 inside a body 111 flows between the outer and inner tubes 117 and 116 of the substance lead-out tube 115.

The substance lead-out tube 115 has a sealing stopper 120 at a proximal end thereof for sealing a proximal end of the outer tube 117. There is formed with a space 121 between the sealing stopper 120 and the inner tube 116, whereby the chemical substance 22 flows from a space between the outer and inner tubes 117 and 116 to a cavity in the inner tube 115.

In case of supplying the chemical substance 22 to the fiber bundle 23, a user of the pest controller 101 presses and deforms the body 111 from outside with a distal end of the pest controller 101 downwardly. Then, as the volume of body 111 is decreased, an inner pressure thereof rises, and the pressure of the substance lead-out tube 115 side of a valve system 113 rises, thereby ensuring that the valve system 113 is open. Thus, the chemical substance 22 of the body 111 is supplied to the fiber bundle 23, so as to volatilize and apply the chemical substance 22 further more. Since the chemical substance 22 is supplied to the fiber bundle 23 with the distal end of the pest controller 101 downwardly, the chemical substance 22 may be applied with adjusting an amount of the chemical substance 22, so as to make it possible to apply a proper amount of the chemical substance 22.

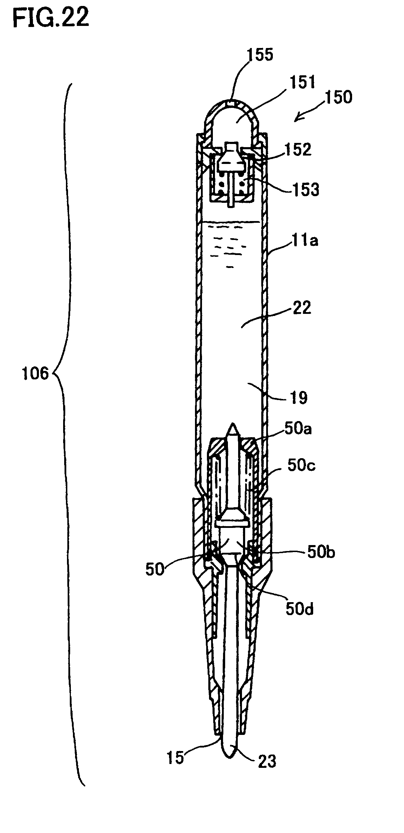

A pest controller 106 in a ninth embodiment, as seen in Fig. 22, includes a pressurizer 150 and holds a chemical substance 22 directly in a container body 11a. A container body 106a of the pest controller 106 employs a same structure as the container body 11a shown in Fig. 4, so that detailed description on those members depicted with the same reference numerals as the container body 11a will not be repeated hereinafter.

The pressurizer 150 is provided with a pressurizing chamber 151, a valve member 152, and a biasing member 153. The pressurizing chamber 151 has a through-hole 155 leading outside, which is formed on a top of a proximal end of the pest controller 106. The valve member 152 is placed between the pressurizing chamber 151 and the inside of body 11 a. The valve member 152 is normally biased toward the pressurizing chamber 151 by the biasing member 153 so as to maintain an airtightness therebetween. If and when a pressure of the pressurizing chamber 151 becomes higher than the inner pressure of the body 11a and a force by the pressure difference becomes bigger than a biasing force of the biasing member 153, the valve member 152 is released of its airtightness, thereby ensuring that a gas in the pressurizing chamber 151 flows from the pressurizing chamber 151 into the body 11a.

The pressurizing chamber 151 is elastic and deformable.

In case of using the pest controller 106, the fiber bundle 23 is pressed to volatilize the chemical substance 22. In case of making its amount more, the chemical substance 22 is supplied further more by the pressurizer 150.

More specifically, the pressurizing chamber 151 is pushed with the through-hole 155 closed. Deformation of the pressurizing chamber 151, which has elasticity, decreases the volume of the pressurizing chamber 151, so that the pressure in the pressurizing chamber 151 rises.

The pressure in the pressurizing chamber 151 rises and becomes higher than the inner pressure of the body 11a, the valve member 152 being released of its airtightness, thereby ensuring that a gas in the pressurizing chamber 151 flows from the pressurizing chamber 151 into the body 11a. On ceasing to push the pressurizing chamber 151, the valve member 152 is moved back by the biasing member 153 to make an airtight condition again and the inner pressure of the body 11a rises.

Further, in a state of high pressure of the body 11a, pushing the fiber bundle 23 toward a proximal end opens the valve system 50, thereby transferring the chemical substance 22 in an inner space 19 to the fiber bundle 23, but it is possible to supply the chemical substance 22 further more to the fiber bundle 23 due to a high pressure of the inside of body 11a. If necessary, a repeat of pushing the pressurizing chamber 151 enables the inner pressure of the body 11a to raise more.

A pest controller 102 in a tenth embodiment of the present invention, as seen in Fig. 10, may be used.

A wick 128 of the pest controller 102, different from the wick 18 of the pest controller 1 in the first embodiment, directly holds a chemical substance 22 in a tube 129. There is provided with a follower 130 movable depending on a consumption of the chemical substance 22 at a proximal end of the chemical substance 22, thereby preventing it from leaking from the proximal end so as to use up the chemical substance 22 to the last. Herein, the follower 130 is a gel of high viscosity.

Eleventh, twelfth and thirteenth embodiments are now described in detail below. Pest controllers 103, 104 and 105 in these embodiments employ chemical substances 41 of solid as well as the pest controller 4 in the second embodiment. The pest controllers 103, 104 and 105 each include a cap 10, though they may be constituted as they dispense with the cap 10.

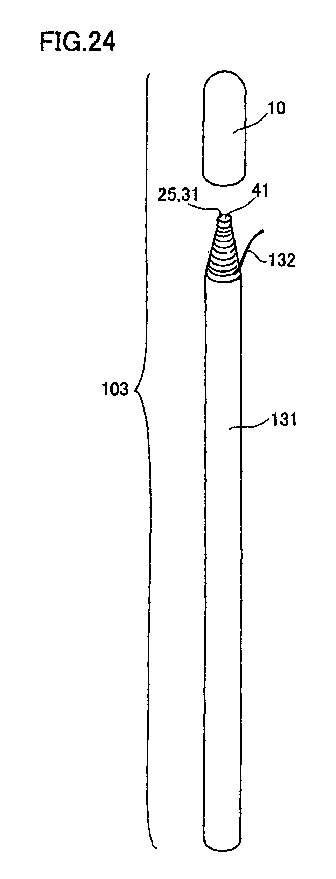

The pest controller 103 in the eleventh embodiment, as seen in Fig. 24, includes the chemical substance 41, the cap 10, a rolled paper 131 and a releasing string 132. The chemical substance 41 is of a columnar shape and rolls up the rolled paper 131. The releasing string 132 is placed between the rolled papers 131, which is released gradually by pulling the releasing string 132.

In case of using the pest controller 103, using of a distal end of the chemical substance 41 as a substance releasing portion 25 volatilizes an active ingredient from the distal end of the chemical substance 41 to control pests. Or using of the distal end of the chemical substance 41 as a substance applicator 31 volatilizes an active ingredient to control pests by contacting the distal end of the chemical substance 41 with a spot for controlling pests.

According as its use, the chemical substance 41 is reduced and an exposing portion becomes small, resulting in a decrease of an amount of volatilization of an active ingredient and a difficulty in application of the chemical substance 41. However, by the pest controller 103, pulling the releasing string 132 gradually removes the rolled paper 131 to change an exposing area, thereby enabling a required exposing area of the chemical substance 41.

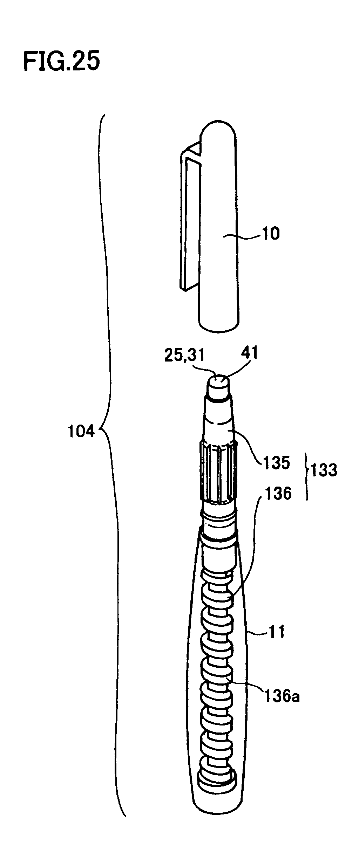

The pest controller 104 in the twelfth embodiment of the invention, as seen in Fig. 25 includes the chemical substance 41, a propelling portion 133, a container body 11 and the cap 10. The propelling portion 133 consists essentially of an operating portion 135 and a threaded rod 136 (i.e. screw).

The operating portion 135 is of a cylindrical shape and is engaged with the threaded rod 136 with the portion 135. The threaded rod 136 is of a stick shape and has a spiral projection 136a. The operating portion 135 is turnable relative to the body 11. The threaded rod 136 is adapted to be propelled out and in by turning the operating portion 135.

The chemical substance 41 is held at a distal end of the threaded rod 136, and moves in response to the threaded rod 136 propelled out and in, so as to be able to propel the chemical substance 41 out.

In case of using the pest controller 104, as well as the pest controller 103 in the eleventh embodiment, the distal end of the chemical substance 41 is to be used as a substance releasing portion 25 or a substance applicator 31 to volatilize an active ingredient for controlling pests.

According as its use, the chemical substance 41 is reduced and an exposing portion becomes small, resulting in a decrease of an amount of volatilization of an active ingredient and a difficulty in application of the chemical substance 41. However, by the pest controller 104, turning the operating portion 135 propels the chemical substance 41 out for getting a required exposing area of the chemical substance 41.

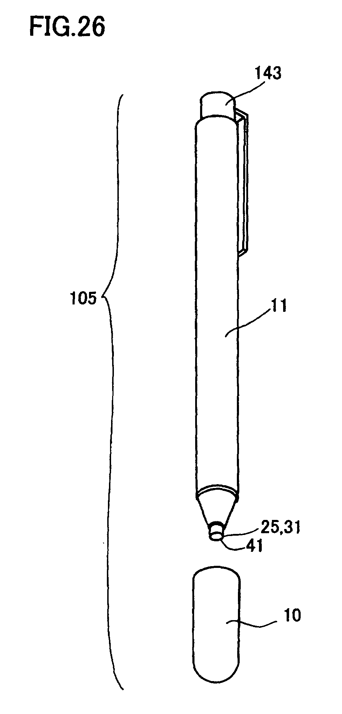

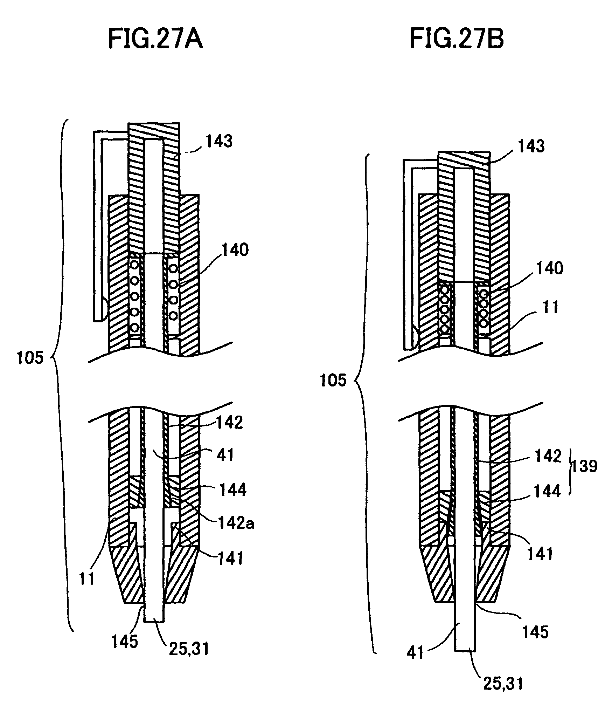

The pest controller 105 in the thirteenth embodiment of the invention, as seen in Figs. 26 and 27, includes the chemical substance 41, a propelling portion 139, a biasing member 140, a knocker 143, a container body 11 and the cap 10.

The propelling portion 139 consists essentially of a substance retaining tube 142 and a chuck 144. The substance retaining tube 142 is of a cylindrical shape and provided with a taper 142a whereby an outer diameter becomes larger as toward a distal end. The outer circumference of the taper 142a engages with the chuck 144 to press the substance retaining tube 142 inside. The chemical substance 41 is positioned inside the substance retaining tube 142 and exposed from an opening 145 of the body 11.

The substance retaining tube 142 is biased toward a proximal end by the biasing member 140. Referring to Fig. 27A, in which this state is illustrated, the chuck 144 is engaged with and pressed by the taper 142a of the substance retaining tube 142. The chemical substance 41 is held in the substance retaining tube 142.

Pushing the knocker 143 with a stronger force than the biasing member 140 lets the substance retaining tube 142 move forward toward the distal end, thereby letting the chemical substance 41 move forward.

Moving the knocker 143 further forward makes the chuck 144 come in contact with an inner projection 141 of the body 11, so that only the substance retaining tube 142 moves forward, and as seen in Fig. 27B, the engagement of the taper 142a with the chuck 144 is released. Then, the force on the knocker 143 being loosened, the knocker 143 moves backward by a force of the biasing member 140, but the chemical substance 41 does not move back because the engagement with the chuck 144 is released.

In order to move the chemical substance 41 back to accommodate it in the body 11, the chemical substance 41 is to be pushed toward the proximal end with pushing the knocker 143. The engagement with the chuck 144 of the taper 142a is released so as to be in an open state, so that the chemical substance 41 is accommodated readily.

Thus structure of the pest controller 105 enables a propelling-out and an accommodation of the chemical substance 41.

In case of using the pest controller 105, as well as the pest controller 103 in the eleventh embodiment, the distal end of the chemical substance 41 is to be used as a substance releasing portion 25 or a substance applicator 31 to volatilize an active ingredient for controlling pests.

According as its use, the chemical substance 41 is reduced and an exposing portion becomes small, resulting in a decrease of an amount of volatilization of an active ingredient and a difficulty in application of the chemical substance 41. However, by the pest controller 105, pushing the knocker 143 propels the chemical substance 41 out for changing the exposing area of the chemical substance 41. If the knocker 143 is not pushed, the chuck 144 prevents the chemical substance 41 from moving back.

Still further, pest controllers as described below may be constituted by a container adapted to be directly worn and/or attached to clothes. Or a container may also have an attaching member with which the pest controller is adapted to be attachable to such foreign body as clothes and an outdoor tent. Or without such a member as referred to as "a container" in usual meaning, a pest controller may be constituted only by a substance exposing portion.

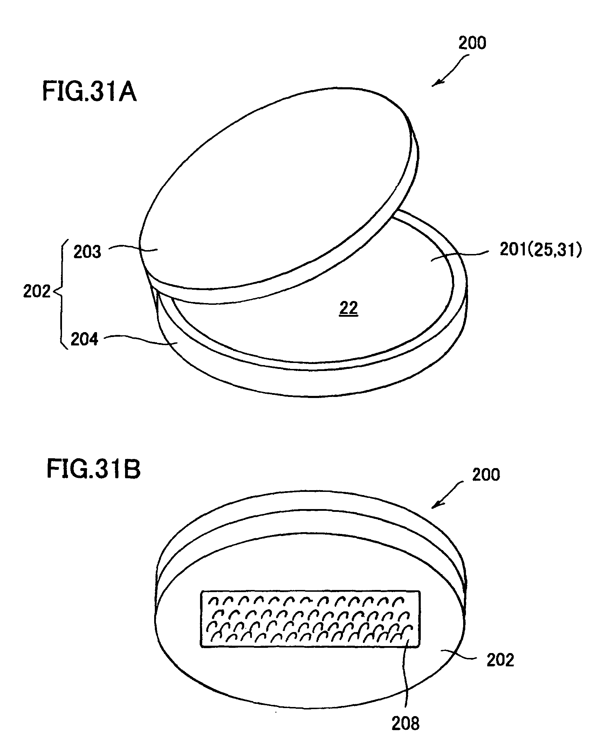

A pest controller 200 in a fourteenth embodiment of the invention is illustrated in Fig. 31. The pest controller 200 includes a container body 202 of a disc shape and a substance retaining member 201 for holding a chemical substance 22. The body 202 consists essentially of a lid 203 and a base 204, which are substantially of the same size. Putting the lid 203 and the base 204 together forms a sealed cavity therewithin, wherein a substance retaining member 201 is provided.

As to the pest controller 200, the substance retaining member 201 is used as a substance exposing portion. More specifically, using the substance retaining member 201 as a substance releasing portion 25 or a substance applicator 31 volatilizes an active ingredient contained in the chemical substance 22 for controlling pests. Further, the lid 203 functions as a cover for sealing the substance exposing portion.

The pest controller 200, as seen in Fig. 31B, further includes an attaching member 208 on a back of the body 202. The attaching member 208 allows the pest controller 200 to be attachable to users' clothes. Therefore, users may attach the pest controller 200 on their clothes so as to readily carry the pest controller 200. Herein, the attaching member 208 may be the known materials, which only have to be attachable to clothes such as an adhesive substance, a surface fastener and a safety pin. The attaching member described above is used for the pest controller in any other embodiment

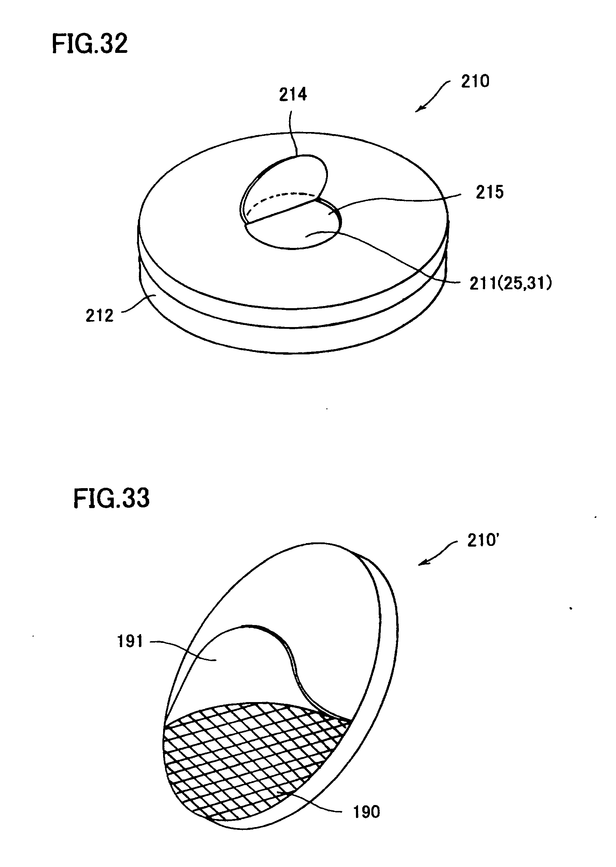

A pest controller 210 in a fifteenth embodiment of the invention is illustrated in Fig. 32. The pest controller 210 includes a container body 212 of a tabular or disc shape, the surfaces of which are of circular shape, and a substance retaining member 211 holding a chemical substance 22. The body 212 has an opening 215 formed on one surface thereof and a lid 214 covering the opening 215. The lid 214 is a deformable sheet and covers the opening 215 by such as an adhesive substance so as to seal up the inside of container.

In case of using the pest controller 210, as seen in Fig. 32, by removing the lid 213 as pulling it out, the opening 215 is released. Then the chemical substance 22 held in the substance retaining member 211 provided inside the body 212 volatilizes from the opening 215.

The lid 213 has a smaller area than the body 212 and looks like a part of the surface of the body 212, but it is also possible, as a pest controller 210' shown in Fig. 33, to include a lid 213 with which the whole area of a surface of a container body 212 is covered.

The pest controller 210' is of a thin badge shape and has no special member referred to as "a container" in usual meaning. The pest controller 210' includes a main body 190, which holds and exposes a chemical substance absorbed through its surface. The surface of main body 190 is covered with a thin sheet 191, whereby an exposing face of the chemical substance is covered. That is, the embodiment uses the deformable sheet 191 as a cover, with which a substance exposing portion is covered, for example, with the aid of an adhesive substance. In use of the pest controller 210', the sheet 191 is removed as pulling it out, so as to expose the substance exposing portion for volatilizing the chemical substance into open air.

The pest controller 210' may also have an attaching member, not shown, to attach it to users' clothes or an outdoor tent.

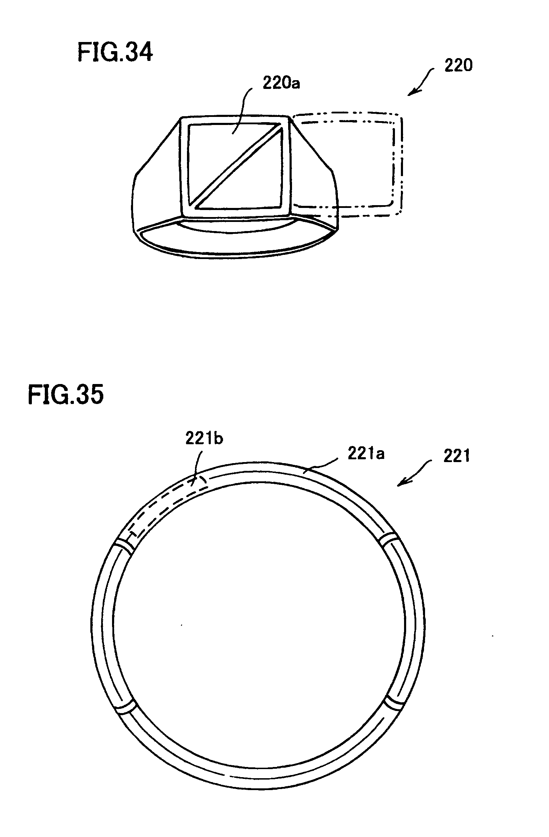

Still further, pest controllers shown in Figs. 34-43 may be available. By such controllers, it is easy for users to directly wear and/or attach to clothes and carry them. Further, the controllers are seemingly of wearing such as ornaments so as to be used without sense of incompatibility. A position for wearing them may be any of body parts consisting of a head, an arm, a finger, a trunk and a foot.

The pest controllers shown in Figs. 34-43 each include a container accommodating a chemical substance 22 therewithin, wherein a substance exposing portion is sealed by a cover, so as to volatilize an active ingredient contained in the chemical substance 22 for controlling pests when the controllers are used.

More specifically, a pest controller in a sixteenth embodiment in Fig. 34 is of a ring shape and includes a container 220a, the inner space of which is sealed with a lid 220b.

A pest controller 221 shown in Fig. 35 is of a bracelet shape, available as a bracelet, and includes a container 221a of a tubular shape, the inner space of which is sealed with a lid 221b.

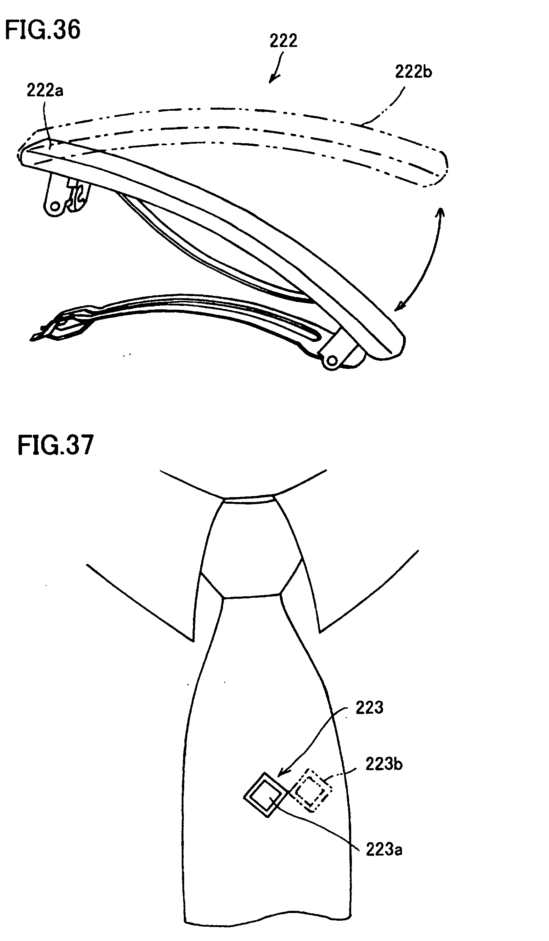

A pest controller 222 shown in Fig. 36 is of a hair ornament, available as a hair ornament, and includes a container 222a, the inner space of which is sealed with a lid 222b.

A pest controller 223 shown in Fig. 37 is of a tiepin, available as a tiepin, and includes a container 223a, the inner space of which is sealed with a lid 223b.

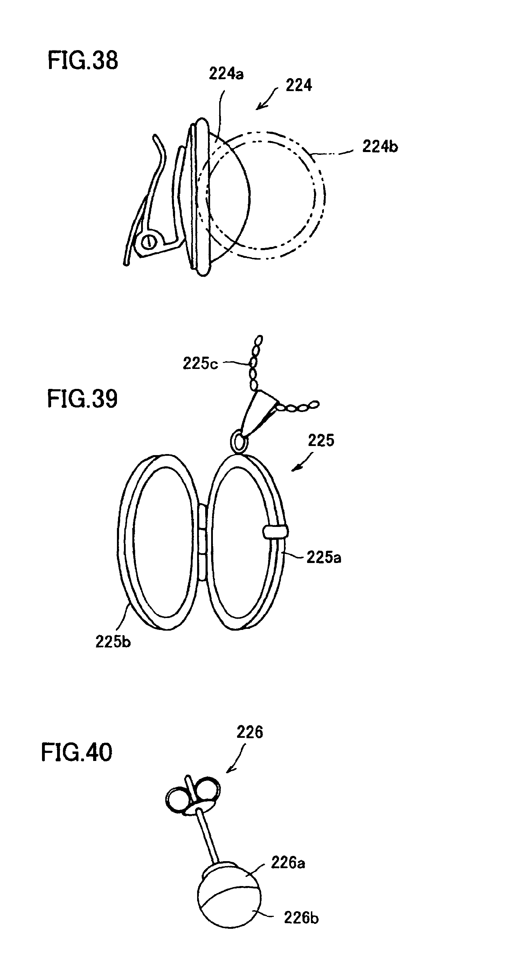

A pest controller 224 shown in Fig. 38 is of earrings, available as earrings, and includes a container 224a, the inner space of which is sealed with a lid 224b.

A pest controller 225 shown in Fig. 39 is of a locket pendant and includes a container 225a and a chain 225c, which are connected each other. The controller 225 is available as a locket pendant, the inner space of container 225a being sealed with a lid 225b.

A pest controller 226 shown in Fig. 40 is of pierces, available as pierces, and includes a container 226a, the inner space of which is sealed with a lid 226b.

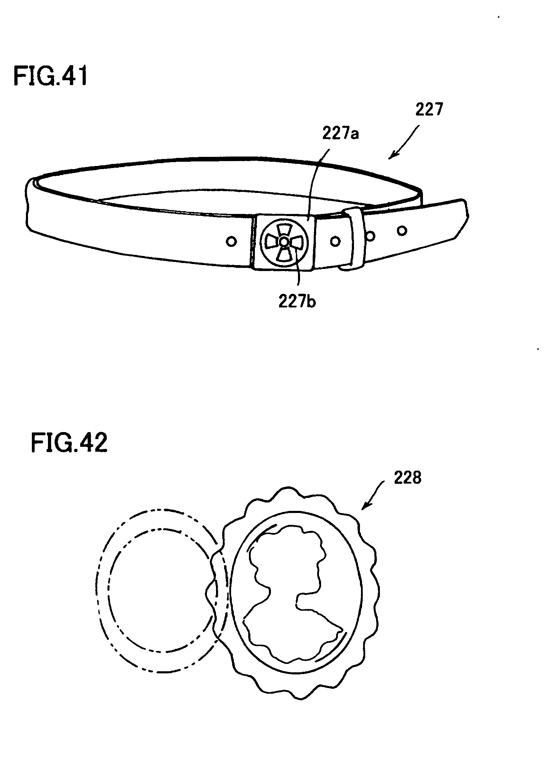

A pest controller 227 shown in Fig. 41 is of a belt, available as a belt, and includes a container 227a, the inner space of which is sealed with a lid 227b.

A pest controller 228 shown in Fig. 42 is of a broach, available as a broach, and includes a container 228a, the inner space of which is sealed with a lid 228b.

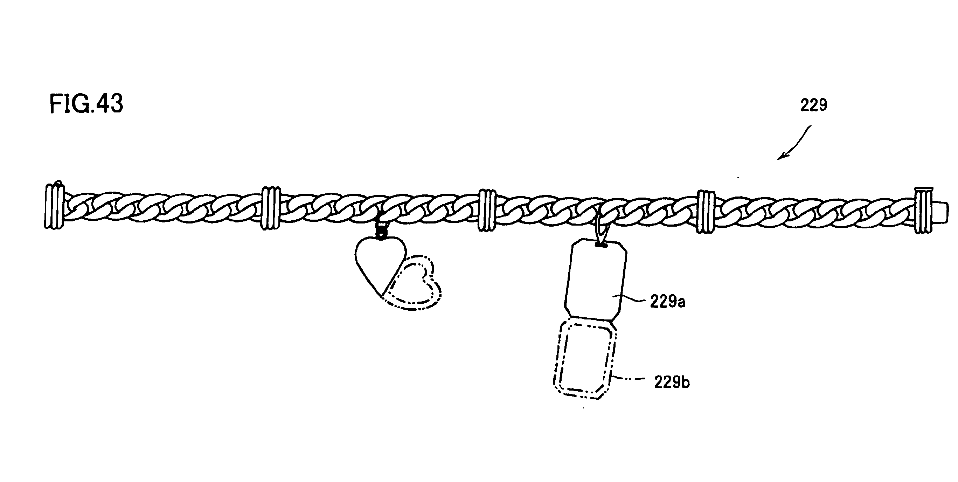

A pest controller 229 shown in Fig. 43 is of a bangle, available as an armlet or an anklet, and includes a container 229a, the inner space of which is sealed with a lid 229b.

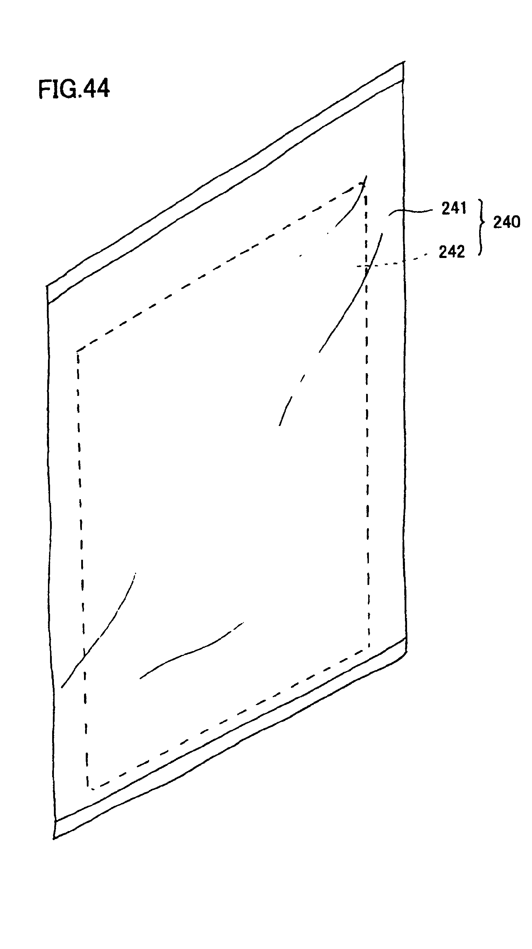

Pest controllers 240, 250, and 260 in twenty-sixth, twenty-seventh, and twenty-eighth embodiments shown in Figs. 44-48 may be available. The controllers 240, 250, and 260 each are portable and accommodate therewithin a chemical substance 22 containing an active ingredient with a pest-controlling effect against harmful pests for human body and being volatilizable at a normal temperature.

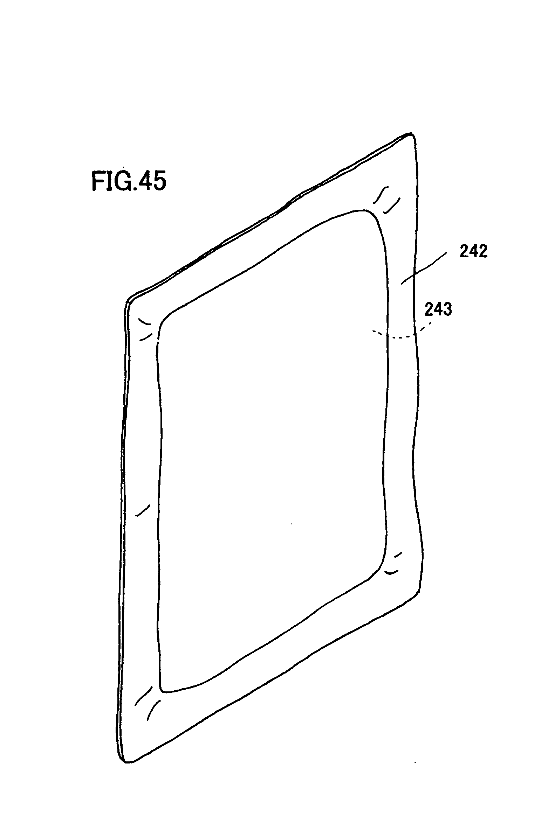

The pest controller 240 in the twenty-sixth embodiment, as seen in Fig. 44, is of a slightly thick sheet, and includes a sealing bag 241 and an air-permeable bag 242 that is put inside the sealing bag 241. The air-permeable bag 242 is illustrated in Fig. 45.

The sealing bag 241 is made of such material as preventing a chemical substance 22 from volatilizing outside, more specifically, being formed in a bag shape with a multi-layered film made of resin. The sealing bag 241 covers the air-permeable bag 242, thereby maintain airtightness.

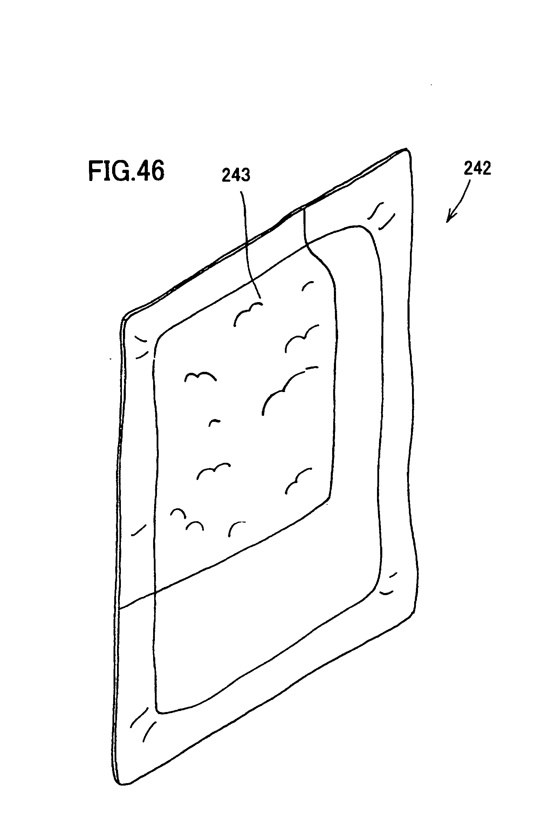

The air-permeable bag 242 is made of an air-permeable material, for example, an unwoven cloth. The chemical substance 22 is accommodated within and covered by the air-permeable bag 242. Consequently, the chemical substance 22 is movable outside the air-permeable bag 242. More specifically, as seen in Fig. 46, the air-permeable bag 242 is provided with a substance absorbing member 243 being adapted to be soaked with the liquid chemical substance 22, and accommodates the substance absorbing member 243 soaked with the chemical substance 22. The substance absorbing member 243 is made of any material being absorbable of a liquid such as fiber and a porous member. The chemical substance 22 contains an active ingredient with a pest-controlling effect against harmful pests for human body and being volatilizable at a normal temperature.

The pest controller 240 is thus constituted, thereby allowing the chemical substance 22 absorbed in the substance absorbing member 243 to pass out of the air-permeable bag 242. However, in such a condition that the air-permeable bag is put in the sealing bag 241, a vapor of the chemical substance 22 is sealed by the sealing bag 241 and does not transpire outside.

In case of using the pest controller 240, a part of the sealing bag 241 it to be cut so as to take out the air-permeable bag 242 therewithin. Thereby, the chemical substance 22 inside the air-permeable bag 242 transpires outside, the active ingredient controlling pests. Herein, the chemical substance 22 is accommodated within the air-permeable bag 242, so that the liquid chemical substance 22 does not disperse outside. Thus, the liquid chemical substance 22 does not contact directly with a body or the like.

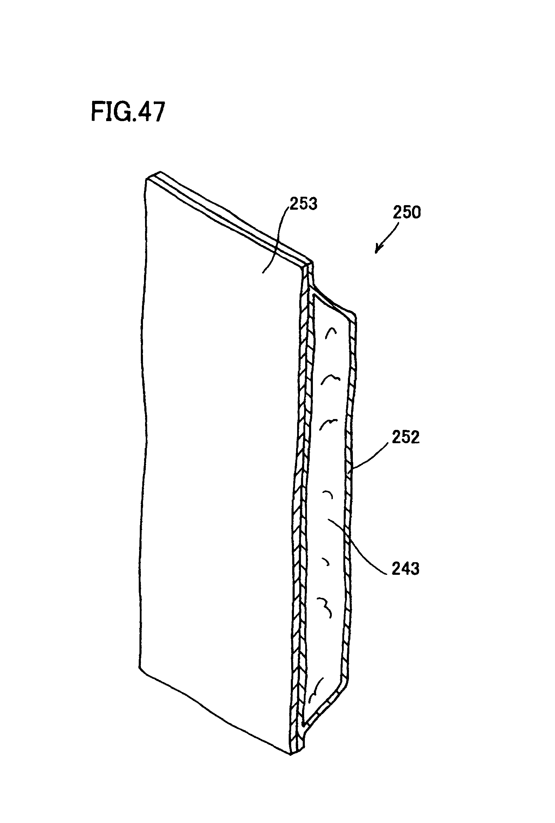

The pest controller 250 in the twenty-seventh embodiment, as seen in Fig. 47, includes an air-permeable bag 252 that is different from that of the pest controller 240 in the twenty-sixth embodiment.

More specifically, an adhesive member 253 is provided in a part of the air-permeable bag 252. That is, the whole surface of one side of the air-permeable bag 252 of sheet has an adhesive member 253, whereby the pest controller 250 is attachable to human body or clothes so as to be portable, or fixable to an outdoor tent or the like for controlling pests.

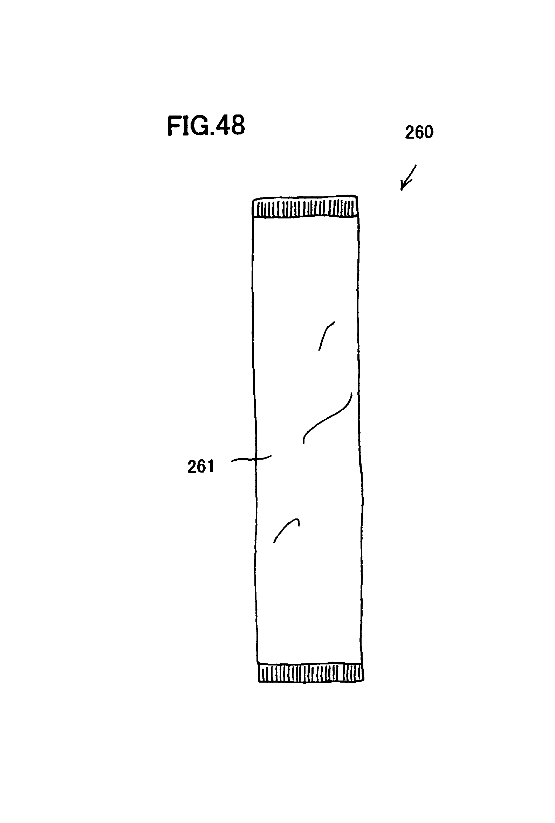

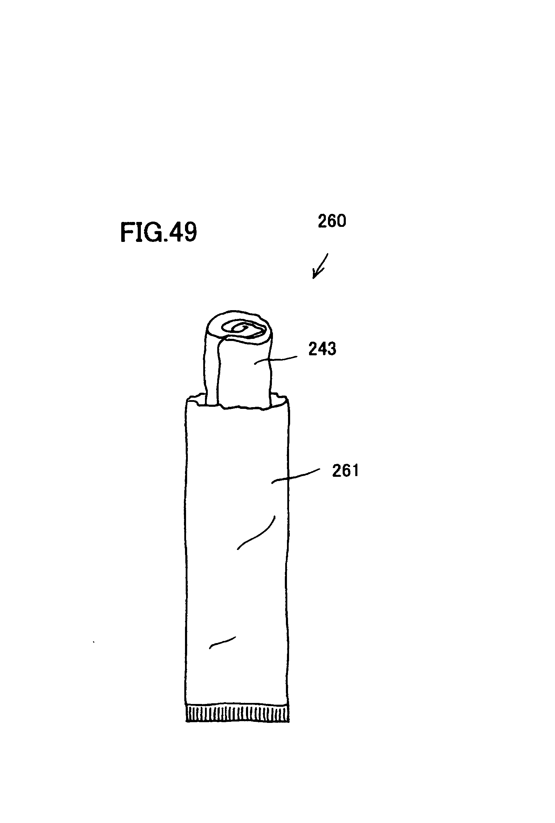

The pest controller 260 in the twenty-eighth embodiment, as seen in Figs. 48 and 49, is of a bar shape and a portable size, and includes a sealing bag 261 and a substance absorbing member 243. The substance absorbing member 243 is made of fibrous sheet adapted to be soaked with a liquid chemical substance 22. The substance absorbing member 243 soaked with the chemical substance 22 is formed into a bar shape by rounding the sheet. Then, the substance absorbing member 243 of a bar shape is put and sealed in the sealing bag 261. Herein, the chemical substance 22 contains an active ingredient with a pest-controlling effect against harmful pests for human body and being volatilizable at a normal temperature.

In case of using the pest controller 260, a part of the sealing bag 261 it to be cut so as to release the sealing condition of the substance absorbing member 243 for controlling pests. For example, with a part of the sealing bag 261 cut, insert the pest controller 260 into a breast pocket, thereby the chemical substance 22 inside the bag transpires outside, an active ingredient controlling pests. The part of the pocket where the pest controller 260 is inserted is covered with a part of the sealing bag 261, so that the chemical substance 22 does not contact directly with clothes.

The chemical substances 22 and 41 may be active ingredients only, though a solvent or an addictive may be added. Or, it is possible to enclose an active ingredient in a microcapsule or the like to volatilize by crushing it when applying the chemical substance. In this case, without the caps 10 and 35, it is possible to prevent the active ingredient from volatilizing.

Pests being controllable by the pest controllers 1, 4, 5, 6, 7, 7a, 7b, 100, 101, 102, 103, 104, 105, and 106 are, for example, as follows:
Hemiptera such as Delphcidae (small brown planthoppers) including *Laodelphax striatellus, Nilaparvata lugens* and *Sogatella furcifera*, Deltocephalidae including *Nephotettix cincticeps* and *Nephotettix virescens,* Aphididae, Heteroptera, Aleyrodidae, Coccoidea, Tingidae, and Psyllidae;
Lepidoptera such as Pyralidae including *Chilo suppressalis, Cnaphalocrocis medinalis* and *Plodia interpunctella* (Indian meal moth), *cutworms including Spodoptera litura, Mythimna separata (Pseudaletia separata)* and *Agrotis segetum*, Pieridae including *Pieris rapae,* Torticoidea including *Adoxophyes orana*, Carposinidae, Lyonetiidae, Lymantriidae, Plusiinae, *Agrotis spp.* including *Agrotis segetum and Agrotis ipsilon, Helicoverpa spp., Heliothis spp., Plutella xylostella, Parnara guttata guttata,* *Tinea translucens*, and *Tineola bisselliella*;
Diptera such as *Culex spp*. including *Culex pipiens pallens* and *Culex tritaeniorhynchus*, *Aedes spp.* (striped mosquitoes) including *Aedes aegypti* and *Aedes albopictus* (Asian tiger mosquito), *Anopheles spp.* including *Anopheles sinensis,* Chironomidae, Muscidae including *Musca domestica* (housefly) and *Muscina stabulans*, Calliphoridae, Sarcophagidae, Anthomyiidae (anthomyiid flies) including *Delia platura* (seed-corn fly, seedcorn maggot), *Fannia canicularis* and *Hylemya antique*, *Tephritidae spp.,* Drosophilidae, Psychodidae, Tabanidae, Simuliidae (black flies), and *Stomoxys spp*. (biting muscid flies);
Coleoptera such as *Diabrotica spp.* (corn rootworms) including *Diabrotica virgifera virgifera* (western corn rootworm) and *Diabrotica undecimpunctata howardi* (southern corn rootworm), Scarabaeidae including *Anomala cuprea* and *Anomala rufocuprea*, Curculionidae including *Sitophilus zeamais* (maize weevil), *Lissorhoptrus oryzophilus*, *Anthonomus grandis* (boll weevil) and *Callosobruchus chinensis* (adzuki-bean weevil, adzuki bean beetle), Tenebrionidae including *Tenebrio obscurus* and *Tribolium castaneum* (red flour beetle), Chrysomelidae including *Oulema oryzae* (rice leaf beetle), *Phyllotreta nemorum* and *Aulacophora femoralis* (cucurbit leaf beetle), *Odontotermes formosanus*, *Epilachna spp.* including *Epilachna vigintioctopunctata*, Lyctidae (powder post beetles), *Cryptotermes domesticus, Reticulitermes flavipes*, and *Paederus fuscipes* (robe beetle);
Dictyoptera (Blattaria) such as *Blattella germanica* (German cockroach), *Periplaneta fuliginosa* (smokybrown cockroach), *Periplaneta Americana* (American cockroach), *Periplaneta brunnea* (brown cockroach), and *Blatta orientalis* (oriental cockroach);
Thysanoptera such as *Thrips palmi, Frankliniella occidentalis* (western flower thrips), and *Thrips hawaiiensis*;
Hymenoptera such as Formicidae (ants), Vespidae, Bethylidae, and Megalodontoidea (Tenthredinoidea) including *Athalia spp*.;
Orthoptera such as *Gryllotalpa fossor,* and Acrididae (grasshopper);
Siphonaptera such as *Pulex irritans* (human flea), and *Ctenocephalides felis* (cat flea);
Anoplura such as *Pediculus humanus* (human louse), and *Pthirus pubis* (crab louse);
Isoptera such as *Reticulitermes speratus* (Japanese subterranean termite), and *Coptotermes formosanus* (Formosan subterranean termite);
Acarina such as Pyroglyphidae including *Dermatophagoides farinae* (American house dust mite) and *Dermatophagoides pteronyssinus*, Acaridae including *Tyrophagus putrescentiae* (mold mite) and *Aleuroglyphus ovatus*, Glycyphagidae (Chortoglyphidae) including *Glycyphagus privates, Glycyphagus domesticus* and *Glycyphagus destructor*, Cheyetidae including *Cheyletus malaccensis* and *Cheyletus malaccesis*, Tarsonemidae, Chortoglyphidae, Haplochthoniidae, Tetranychidae (spider mites), Metastigmata (ticks) including *Haemaphysalis longicornis*, *Tetranychus urticae*, *Teatrancychus kanzawai*, *Panonychus citri,* and *Panonychus ulmi.*

Other harmful pests not described above are also controllable. If the active ingredient of the pest controller 1 of the present invention has a pest-controlling effect against harmful pests, it is needless to say that even resistant harmful pests are effectively controlled.

A pest-controlling effect by the pest controller 1 of the present invention will be further detailed below by the following test examples; however, the present invention is not limited to those examples.

### Example 1

### (A pest controlling effect by volatilization of the chemical substance 22 from the substance releasing portion)

Test pest controllers (a) and (b) were made by the pest controller 1 shown in Fig.2 with chemical substance 22 containing compound (A) (2,3,5,6-tetrafluoro-4-methoxymethylbenzyl 3-(1-propenyl)-2,2-dimethylcyclopropanecarboxylate, the vapor pressure at 25°C by Donovan method: 1.4 x 10⁻⁵ mmHg) as an active ingredient.

The chemical substance 22 of the test controller (a) was a solution that 2.0g of compound (A) was mixed and dissolved with about 10mg of a color material, Sumiplast Blue OA, which was filled in the wick 18 by dropping. The chemical substance 22 of the test controller (b) was a 1.1g of solution that compound (A) mixed and dissolved with ethanol by weight ratio 1 : 1, and further mixed and dissolved with about 5mg of a color material, Sumiplast Blue OA, which was filled in the wick 18 by dropping.

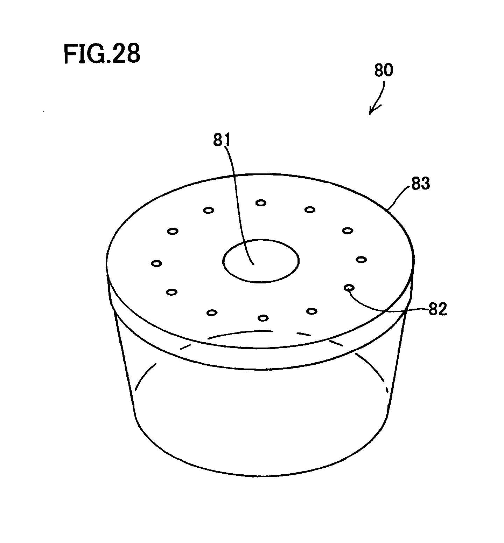

On the other hand, female adult common mosquitoes *(Culex pipiens pallens)* used for a tested pest were anaesthetized by carbon dioxide, and then a group of 10 mosquitoes was put into a cup 80 made of PET (having a bottom diameter of 8cm, a lid diameter of 9.5cm and a height of 4.5cm) shown in Fig. 28. The cup 80 had a hole 81 having a diameter of 3cm at a center and a lid 83 provided with twelve small vents 82 as air holes. Then the lid 83 was attached to the cup 80, the hole 81 was covered with a piece of cotton soaked with 1 % sucrose solution, and this state was left sitting as it was so as to recover the anaesthetized mosquitoes.

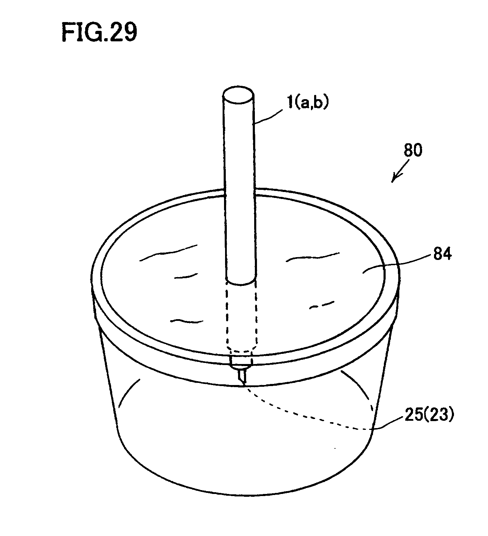

The test controllers (a) and (b) confirmed that the color material reached the distal end of fiber bundle, the substance releasing portion 25 and that the filled solution reached there. The controller was inserted into a hole having a diameter of 6mm opened at a center of a filter paper 84 having a diameter of 9cm without the cap, and set by exchanging by the cotton so that the distal end of fiber bundle 23 was positioned at a length of 3cm into the cup from the lid surface. The state is illustrated in Fig. 29. After setting, the number of mosquitoes knocked down was counted at regular intervals. Further the same test was carried out again.

As a pest controller used for comparison, the one in which only about 1g of ethanol was filled in the wick 18 by dropping was prepared and the same test as described in Example 1 was carried out to count the number of mosquitoes knocked down at regular intervals. The results are shown in Table 1.

The test controllers (a) and (b) both showed an apparent immediate effect.

**Table 1**

| | | Number of female adult common mosquitoes knocked down | | | | |
|---|---|---|---|---|---|---|
| | | after 2 min. | after 4 min. | after 6 min. | after 8 min. | after 10 min. |
| Test pest controller (a) | 1^{st} run | 1 | 2 | 10 | - | - |
| | 2^{nd} run | 1 | 5 | 6 | 10 | - |
| Test pest controller (b) | 1^{st} run | 1 | 3 | 7 | 10 | - |
| | 2^{nd} run | 0 | 1 | 7 | 10 | - |
| Pest controller for comparison | 1^{st} run | 0 | 0 | 0 | 0 | 0 |
| | 2^{nd} run | 0 | 0 | 0 | 0 | 0 |

### Example 2

### (A pest controlling effect by volatilization of the chemical substance 22 applied by means of the substance applicator 31 of the pest controller 1)

Using the test pest controllers (a) and (b) made in the text example 1, test filter papers (a') and (b') were made. More specifically, at a center of the filter paper 84 having a diameter of 9cm, a circle having a diameter of 3cm was drawn by a pencil and the substance applicator 31 of the test controllers (a) and (b) applied the substance by contacting with the circle having a diameter of 3cm. Herein, the chemical substance 22 had a color material of blue, thereby being applied as painting up the inside of the circle.

On the other hand, as described in test example 1, female adult common mosquitoes used for a tested pest were anaesthetized by carbon dioxide, and then a group of 10 mosquitoes was put into a cup 80 made of PET (having a bottom diameter of 8cm, a lid diameter of 9.5cm and a height of 4.5cm) shown in Fig. 28. The cup 80 had a hole 81 having a diameter of 3cm at a center and a lid 83 provided with twelve small vents 82 as air holes. Then the lid 83 was attached to the cup 80, the hole 81 was covered with a piece of cotton soaked with 1 % sucrose solvent, and this state was left sitting as it was so as to recover the anaesthetized mosquitoes.

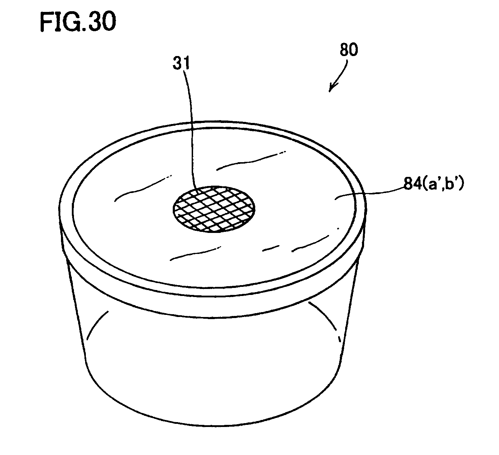

After removing the cotton, the lid 83 was covered with the test filter papers (a') and (b') so as to overlap the hole 81 having a diameter of 3cm of the lid 83 and the test papers (a') and (b'). The state is illustrated in Fig. 30. Upon the test papers (a') and (b') being set, the number of mosquitoes knocked down was counted at regular intervals. Further the same test was carried out again.

As a filter paper used for comparison, the one in which only ethanol was applied was prepared and the same test as described was carried out to count the number of mosquitoes knocked down at regular intervals. The results are shown in Table 2.

The test papers (a') and (b') both showed an apparent immediate effect.

**Table 2**

| | | Number of female adult common mosquitoes knocked down | | | | |
|---|---|---|---|---|---|---|
| | | after 2 min. | after 4 min. | after 6 min. | after 8 min. | after 10 min. |
| Test filter | 1^{st} run | 2 | 6 | 9 | 10 | - |
| paper (a') | 2^{nd} run | 3 | 8 | 10 | - | - |
| Test filter | 1^{st} run | 2 | 3 | 8 | 10 | - |
| paper (b') | 2^{nd} run | 1 | 4 | 9 | 10 | - |
| Filter paper | 1^{st} run | 0 | 0 | 0 | 0 | 0 |
| for comparison | 2^{nd} run | 0 | 0 | 0 | 0 | 0 |

### INDUSTRIAL APPLICABILITY

The present invention, thus constructed, provides an improved pest controller that reduces the possibility of unintentional contact with pest-controlling ingredients volatilizable at a normal temperature, that is easy to carry, that is able to maintain sufficient pest-controlling effect in a portable size, and that is easy to adjust the pest controlling effect.

## Claims

1. A pest controller comprising a portable container holding a chemical substance therewithin,
wherein the container comprises a substance exposing portion for exposing the chemical substance held therein to outside, and a cover for sealing the substance exposing portion;
the chemical substance containing an active ingredient with a pest-controlling effect, and
the active ingredient being volatilizable at a normal temperature.

2. The pest controller as defined in claim 1,
wherein the chemical substance is contactable with an open air at the substance exposing portion so as to be released into the air therefrom when the cover is open.

3. The pest controller as defined in claim 1 or 2,
wherein the substance exposing portion is provided with an applicator for applying the chemical substance onto a body.

4. The pest controller as defined in claim 1, 2, or 3,
wherein the substance exposing portion is constituted by a member selected from a group consisting of a porous body, a fibrous bundle and a member with a through-hole, so that the chemical substance is exposed on a surface thereof.

5. The pest controller as defined in one of claims 1 to 4,
wherein the substance exposing portion is constituted by a member selected from a group consisting of a ball and a roller both being rotatable.

6. The pest controller as defined in one of claims 1 to 5,
wherein the chemical substance is directly held within the container.

7. The pest controller as defined in one of claims 1 to 6,
wherein the chemical substance has a fluidity; and
wherein the container further comprises a substance storage containing the substance and a substance lead-out member provided between the substance storage and the substance exposing portion so as to lead the substance out of the substance storage through the substance lead-out member to the substance exposing portion.

8. The pest controller as defined in one of claims 1 to 7,
wherein the container accommodates a substance retaining member;
the chemical substance being capable of flowing, and retained in the substance retaining member.

9. The pest controller as defined in one of claim 8,
wherein the substance retaining member is made of fiber.

10. The pest controller as defined in one of claims 1 to 9,
wherein the container further comprises a storage tank and a temporary receptacle for the chemical substance.

11. The pest controller as defined in one of claims 1 to 10,
wherein the container is of a cylindrical shape; and
wherein the substance exposing portion is placed at an end of the container of cylindrical shape.

12. The pest controller as defined in one of claims 1 to 11,
wherein the container further comprises a container body holding the chemical substance therewithin;
wherein the body accommodates a substance retaining member adapted to absorbing the chemical substance,
the substance retaining member soaked with the chemical substance; and
wherein the body is provided with the substance lead-out member adapted to leading the chemical substance out of the body;
a proximal part of the substance lead-out member being in contact with the substance retaining member and a distal part of that being exposed out of the body.

13. The pest controller as defined in one of claims 1 to 12,
wherein the substance exposing portion is adapted to adjusting an exposing area of the chemical substance.

14. The pest controller as defined in one of claims 1 to 13,
wherein the substance exposing portion has a window, an opening area of which is changeable.

15. The pest controller as defined in one of claims 1 to 14,
wherein the container further comprises a container body holding the chemical substance therewithin, so as to hold a liquid chemical substance with a fluidity within; and
wherein the body is provided with a substance lead-out member adapted to lead the chemical substance out of the body and a valve system;
the valve system being open by a predetermined operation, whereby the chemical substance inside creeps through the substance lead-out member so as to be exposed out of the body.

16. The pest controller as defined in one of claims 1 to 15,
wherein the container further comprises a substance holder holding the chemical substance with fluidity in a sealing condition therewithin;
the substance holder having a follower moving according to a consumption of the chemical substance.

17. The pest controller as defined in claim 16,
wherein the follower is gel.

18. The pest controller as defined in one of claims 1 to 17,
wherein the container further comprises a container body holding the chemical substance therewithin so as to hold a liquid chemical substance with a fluidity therewithin;
wherein the body is provided with a substance lead-out member adapted to leading the chemical substance out of the body; and
wherein to the substance lead-out member a substance releasing member separately provided is attachable.

19. The pest controller as defined in one of claims 1 to 18,
wherein the container further comprises a container body holding the chemical substance therewithin and an attachment detachable from the body and attachable to the body in at least two ways of attachment, so as to hold a liquid chemical substance with a fluidity therewithin; and
wherein the body is provided with a substance lead-out member adapted to leading the chemical substance out of the body;
the attachment being provided with a cover for sealing the substance lead-out member, and a substance releasing member for helping release of the chemical substance;
the substance lead-out member being sealed by attaching the attachment to the body in a particular position;
the chemical substance being supplied to the substance releasing member from the substance lead-out member by attaching the attachment in another particular position.

20. The pest controller as defined in one of claims 1 to 19,
wherein the container has a deformable portion so that the chemical substance inside the container will be brought out by pressing the deformable portion.

21. The pest controller as defined in one of claims 1 to 20,
wherein the container has a pressurizer for increasing the inner pressure of the container so that the chemical substance is brought out.

22. A pest controller comprising a container holding a chemical substance of columnar shape therewithin;
wherein the container has an opening communicating with the inside of container, and a cover for sealing the opening from outside;
the cover being adapted to opening and shutting;
the chemical substance being adapted to be propelled out of the container through the opening;
the chemical substance containing an active ingredient with a pest-controlling effect;
the active ingredient being volatilizable at a normal temperature.

23. The pest controller as defined in one of claims 1 to 22,
wherein the container further comprises a container body, an operating portion turnable relative to the body, and a screw positioned in the body;
the screw being adapted to turning in response to a turn of the operating portion, so that a force generated by the screw makes the chemical substance be propelled out of the body.

24. A pest controller comprising:
a solid chemical substance formed in a particular shape and containing an active ingredient with a pest-controlling effect;
the active ingredient being volatilizable at a normal temperature; and
a coat formed on the surface of the chemical substance so as to be exfoliated by a predetermined amount.

25. A pest controller comprising a container holding therewithin a chemical substance formed in the shape of a rod;
wherein the chemical substance contains an active ingredient with a pest-controlling effect;
the active ingredient being volatilizable at a normal temperature;
wherein the container has a pusher for pressing the chemical substance, and a chuck being adapted to holding and releasing the chemical substance so that the chemical substance is pushed out by pressing the pusher and held by the chuck, thereby the chemical substance is prevented from moving back.

26. The pest controller as defined in one of claims 1 to 25, comprising a heater for heating the chemical substance.

27. The pest controller as defined in one of claims 1 to 26,
wherein the container further comprises a container body holding the chemical substance therewithin, and a cap being separable from the body and being attached to the body so as to constitute the cover.

28. The pest controller as defined in one of claims 1 to 27,
wherein the container is equipped with a holder for attaching the controller to a body.

29. The pest controller as defined in one of claims 1 to 28,
wherein the container is of a tabular shape; and
wherein the substance exposing portion is of a planar shape.

30. The pest controller as defined in one of claims 1 to 29,
wherein the cover for sealing the substance exposing portion comprises a deformable sheet;
the sheet being removable, so that the cover of substance exposing portion is detached by removing the sheet.

31. The pest controller as defined in one of claims 1 to 30,
wherein the container is adapted to be directly worn and/or attached to clothes.

32. The pest controller as defined in one of claims 1 to 31,
wherein the container has an attaching member for attaching the controller to a body.

33. The pest controller as defined in one of claims 1 to 32,
wherein at least a part of the container is made of biodegradable resin.

34. A pest controller comprising a main body being portable and attachable to a human body and/or clothes,
wherein the main body has a substance exposing portion for exposing a chemical substance to outside;
the chemical substance containing an active ingredient with a pest-controlling effect,
the active ingredient being volatilizable at a normal temperature,
the chemical substance being released from the substance exposing portion into an open air.

35. The pest controller as defmed in claim 34, further comprising a cover for sealing the substance exposing portion;
wherein the cover comprises a deformable sheet;
the sheet being removable, so that the cover of substance exposing portion is detached by removing the sheet.

36. A pest controller comprising a portable and airtight bag,
wherein the bag is adapted to release a sealing condition by releasing an airtightness; and
wherein the bag accommodates a fiber soaked with a chemical substance;
the chemical substance containing an active ingredient with a pest-controlling effect against harmful pests for human body,
the active ingredient being volatilizable at a normal temperature.

37. A pest controller comprising a portable and air-permeable bag,
wherein the bag incorporates a chemical substance;
the chemical substance containing an active ingredient with a pest-controlling effect against harmful pests for human body,
the active ingredient being volatilizable at a normal temperature.

38. The pest controller as defined in claim 37,
wherein the chemical substance is liquid; and
wherein the bag accommodates a substance absorbing member soaked with the chemical substance.

39. The pest controller as defined in claim 37 or 38,
wherein the bag is equipped with an attaching member being attachable to a body.

40. The pest controller as defined in one of claims 1 to 39,
wherein the active ingredient has a vapor pressure at 25°C by Donovan method within a range of 1 x 10⁻⁵ mmHg to 5 x 10⁻³ mmHg.

41. The pest controller as defined in one of claims 1 to 40,
wherein the active ingredient is a pyrethroid compound.

42. The pest controller as defined in claim 41,
wherein the pyrethroid compound has a vapor pressure at 25°C by Donovan method within a range of 1 x 10⁻⁵ mmHg to 5 x 10⁻³ mmHg.

43. The pest controller as defined in one of claims 1 to 42,
wherein the chemical substance contains a sublimable dyestuff.

44. A method for controlling pests with the pest controller as defined in one of claims 1 to 43 by opening the cover of the pest controller at a spot for pests so as to volatilize the chemical substance containing the active ingredient into the air from the substance exposing portion, thereby getting rid of harmful pests.

45. A method for controlling pests with the pest controller as defined in one of claims 1 to 43 by contacting the applicator with a spot for pests to apply the chemical substance on the spot so as to volatilize the chemical substance containing the active ingredient into the air, thereby getting rid of harmful pests.
